(19) Europäisches Patentamt
European Patent Office
Office européen des brevets

(11) **EP 3 541 035 B1**

(12) **EUROPEAN PATENT SPECIFICATION**

(45) Date of publication and mention
of the grant of the patent:
**26.10.2022 Bulletin 2022/43**

(21) Application number: **17875752.2**

(22) Date of filing: **24.02.2017**

(51) International Patent Classification (IPC):
**H04L 69/14** (2022.01)    **H04W 72/04** (2009.01)

(52) Cooperative Patent Classification (CPC):
**H04L 69/14; H04W 72/04**

(86) International application number:
**PCT/CN2017/074768**

(87) International publication number:
**WO 2018/098913 (07.06.2018 Gazette 2018/23)**

(54) **METHOD AND DEVICE FOR SELECTING CHANNEL**

VERFAHREN UND VORRICHTUNG ZUR AUSWAHL VON KANÄLEN

PROCÉDÉ ET DISPOSITIF DE SÉLECTION DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2016 CN 201611091354**

(43) Date of publication of application:
**18.09.2019 Bulletin 2019/38**

(73) Proprietor: **Huawei Technologies Co., Ltd.
Longgang District
Shenzhen, Guangdong 518129 (CN)**

(72) Inventors:
• **WANG, Weigang**
**Shenzhen, Guangdong 518129 (CN)**
• **GAO, Lin**
**Shenzhen, Guangdong 518129 (CN)**
• **HU, Tongming**
**Shenzhen, Guangdong 518129 (CN)**
• **AN, Kang**
**Shenzhen, Guangdong 518129 (CN)**
• **QU, Lihu**
**Shenzhen, Guangdong 518129 (CN)**
• **HU, Yufeng**
**Shenzhen, Guangdong 518129 (CN)**
• **ZHAO, Xuegang**
**Shenzhen, Guangdong 518129 (CN)**

(74) Representative: **Gill Jennings & Every LLP
The Broadgate Tower
20 Primrose Street
London EC2A 2ES (GB)**

(56) References cited:
WO-A1-2016/110046    CN-A- 1 773 970
CN-A- 103 546 971    US-A1- 2004 156 336
US-A1- 2016 081 096

**Description**

**TECHNICAL FIELD**

This application relates to the field of communications technologies, and in particular, to a channel selection method and a device.

**BACKGROUND**

With development of a wireless communications technology, Wireless Fidelity (Wireless Fidelity, Wi-Fi) is increasingly widely applied. A frequency band of 2.4 gigahertz (Gigahertz, GHz) used by a Wi-Fi network becomes increasingly congested and cannot meet a development requirement. Therefore, governments of countries gradually open a frequency band of 5 GHz (5150 MHz to 5825 MHz). In comparison with the frequency band of 2.4 GHz, data transmission efficiency is higher in the frequency band of 5 GHz.

A channel in the 5 GHz frequency band is classified into an indoor channel and an outdoor channel. In some countries, it is stipulated that the indoor channel cannot be used by a device that operates outside, to avoid a case in which a user terminal that does not support the indoor channel cannot scan an AP.

In addition, the channel in the 5 GHz frequency band is classified into a dynamic frequency selection (Dynamic Frequency Selection, DFS) channel and a non-DFS channel. The 5 GHz frequency band partially overlaps an operating frequency band of a global radar system. To prevent a Wi-Fi device that operates in the 5 GHz frequency band from interfering with the radar system, a Wi-Fi device that operates on the DFS channel needs to detect a radar signal in both a starting phase and a running phase. If a radar signal is detected, the device needs to switch the channel to avoid interference with a radar beam. In a radar signal detection process, the user terminal cannot access the AP and a network.

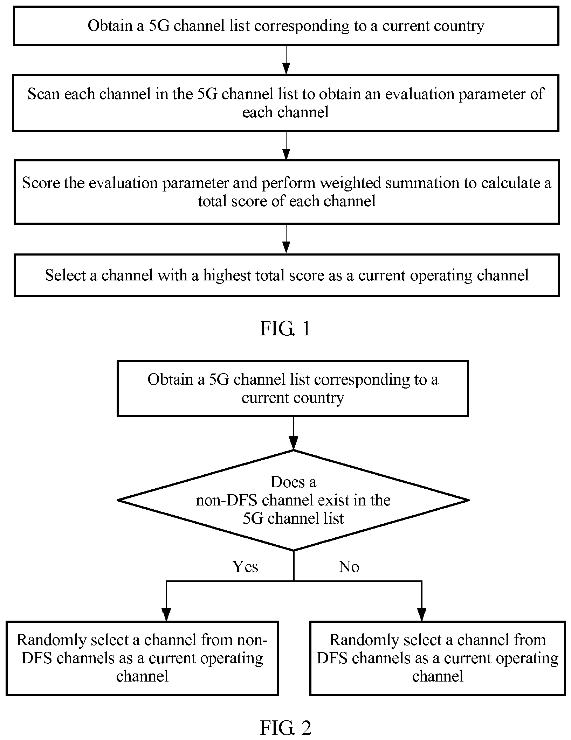

FIG. 1 is a flowchart of a channel selection method in the prior art. The method specifically includes: obtaining a 5 GHz Wi-Fi channel list corresponding to a current country; scanning each channel in the 5 GHz Wi-Fi channel list, to obtain an evaluation parameter of each channel; scoring the evaluation parameter and performing weighted summation, to obtain a total score of each channel; and selecting a channel with a highest total score as a current operating channel.

FIG. 2 is a flowchart of another channel selection method in the prior art. The method specifically includes: obtaining a 5 GHz Wi-Fi channel list corresponding to a current country; and if a non-DFS channel exists in the 5 GHz Wi-Fi channel list, randomly selecting a channel from non-DFS channels in the 5 GHz Wi-Fi channel list as a current operating channel; or if only DFS channels exist in the 5 GHz Wi-Fi channel list, randomly selecting a channel from the DFS channels in the 5 GHz Wi-Fi channel list as a current operating channel.

Disadvantages of the channel selection methods shown in FIG. 1 and FIG. 2 lie in: When the Wi-Fi device operates outside, selecting an indoor channel as the current operating channel violates laws and regulations. If a DFS channel is selected as the current operating channel, the Wi-Fi device needs to detect a radar signal in both a starting phase and a running phase, and the Wi-Fi device cannot access the network in a radar signal detection phase. Consequently a user terminal that accesses the Wi-Fi device cannot access the AP and the network in the detection phase, severely affecting user experience.

US 2004/0156336 relates to methods for implementing a dynamic frequency selection (DFS) and a temporary channel selection feature for WLAN devices. WO 2016/110046 relates to method and apparatus for reducing the radar interference.

**SUMMARY**

The present invention is defined by the appended claims. Preferred embodiments are covered by the appended dependent claims.

**BRIEF DESCRIPTION OF DRAWINGS**

To describe the technical solutions in this application or in the prior art more clearly, the following briefly describes the accompanying drawings required for describing the embodiments or the prior art.

FIG. 1 is a schematic flowchart of a channel selection method in the prior art;
FIG. 2 is a schematic flowchart of another channel selection method in the prior art;
FIG. 3 is a schematic diagram of an architecture of a network system according to this application;
FIG. 4A and FIG. 4B are a schematic flowchart of a channel selection method according to this application;
FIG. 5-1 is a schematic flowchart of determining whether a current operating channel can be selected from a first channel set according to this application;

FIG. 5-2 is a schematic flowchart of determining whether a current operating channel can be selected from a second channel set according to this application;

FIG. 5-3 is a schematic flowchart of determining whether a current operating channel can be selected from a third channel set according to this application;

FIG. 5-4 is a schematic flowchart of determining whether a current operating channel can be selected from a fourth channel set according to this application;

FIG. 6 is a schematic structural diagram of a device according to this application; and

FIG. 7 is a schematic structural diagram of another device according to this application.

**DESCRIPTION OF EMBODIMENTS**

The following describes the technical solutions of this application with reference to the accompanying drawings.

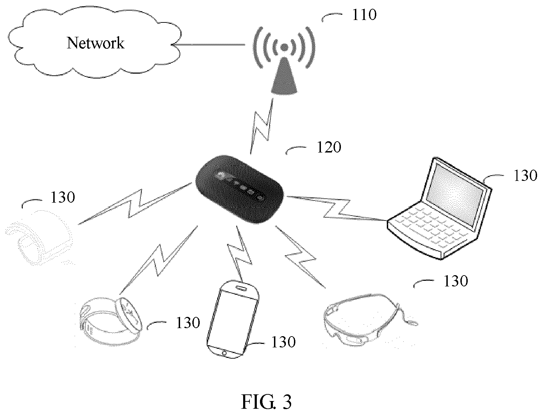

Referring to FIG. 3, FIG. 3 is a schematic diagram of an architecture of a network system according to a background example useful for understanding the present invention. As shown in FIG. 3, the network system includes an access device 110, a Wi-Fi device 120, and a user terminal 130.

The access device 110 is an access point at which the Wi-Fi device 120 enters a network, so that the Wi-Fi device accesses the network and a network resource. The access device 110 may be a base station (Base Station, BS) or a wireless access point (The wireless access point, wireless AP).

The Wi-Fi device 120 is connected to the access device 110 to access the network. The Wi-Fi device includes but is not limited to a mobile Wi-Fi (Mobile Wi-Fi, MiFi) device, a router, a switch, and the like. A Wi-Fi chip is configured on the Wi-Fi device. The Wi-Fi chip may support the Wi-Fi device 120 in operating in a 5 GHz frequency band, and select a channel in the 5 GHz frequency band as an operating channel. The Wi-Fi device 120 may be connected to a plurality of user terminals 130. When performing data communication with the plurality of user terminals 130 connected to the Wi-Fi device 120, the Wi-Fi device 120 transmits information and data by using the operating channel selected by the Wi-Fi chip.

The user terminal 130 is a device on which a Wi-Fi communications module is configured and that supports 5 GHz Wi-Fi. The user terminal 130 may access the Wi-Fi device 120 by using the Wi-Fi communications module, and access the access device 110 by using the Wi-Fi device 120, to access the network, so as to perform data communication with another device. The user terminal 130 includes but is not limited to a smartphone (such as an Android mobile phone or an iOS mobile phone), a tablet computer, a palmtop computer, a notebook computer, a mobile Internet device (Mobile Internet Device, MID), a wearable device (such as a smartwatch or a smart band), and the like.

When operating, the Wi-Fi device 120 transmits information or data to the access device 110 or the user terminal 130 in the 5 GHz frequency band. Some channels are obtained through division in the 5 GHz frequency band based on different frequencies. Referring to Table 1, Table 1 is a schematic diagram of division of some available channels in the 5 GHz frequency band and available channels in some areas.

First, the channels in the 5 GHz frequency band may be classified into a W52 channel set, a W53 channel set, a W56 channel set, and a W58 channel set based on different frequencies. Channels with frequencies around 5.2 GHz are collectively referred to as the W52 channel set. The W52 channel set includes: {channel 36, channel 40, channel 44, channel 48}. Channels with frequencies around 5.3 GHz are collectively referred to as the W53 channel set. The W53 channel set includes {channel 52, channel 56, channel 60, channel 64}. Channels with frequencies around 5.6 GHz are collectively referred to as the W56 channel set. The W56 channel set includes {channel 100, channel 104, channel 108, channel 112, channel 116, channel 120, channel 124, channel 128, channel 132, channel 136, channel 140, channel 144}. Channels with frequencies around 5.8 GHz are collectively referred to as the W58 channel set. The W58 channel set includes {channel 149, channel 153, channel 157, channel 161, channel 165}.

Each channel in the W52 channel set is an indoor non-DFS channel. Each channel in the W53 channel set is an indoor DFS channel. Each channel in the W56 channel set is an outdoor DFS channel. Each channel in the W58 channel set is an outdoor non-DFS channel. The indoor channel can be used only by a Wi-Fi device that operates inside, but cannot be used by a Wi-Fi device that operates outside. A frequency band of the DFS channel overlaps an operating frequency band of a global radar system. A Wi-Fi device that operates on the DFS channel needs to detect a radar beam in both a starting phase and a running phase. In addition, in a detection process, a user terminal accessing the Wi-Fi device that operates on the DFS channel cannot access an AP, and consequently cannot use Wi-Fi.

A plurality of channels are obtained through division in the 5 GHz frequency band, but not all the channels in the 5 GHz frequency band can be used. Because the 5 GHz frequency band partially overlaps the frequency band of the global radar system, in consideration of security, 5 GHz frequency bands opened by countries and areas for use are different. For details, refer to Table 1.

Table 1

| | Channel | Frequency | United States | Europe | Japan | Singapore | China | Taiwan |
|---|---|---|---|---|---|---|---|---|
| **W52 channel set** | Channel 36 | 5180 MHz | Available | Available | Available | Available | Available | Available |
| | Channel 40 | 5200 MHz | Available | Available | Available | Available | Available | Available |
| | Channel 44 | 5220 MHz | Available | Available | Available | Available | Available | Available |
| | Channel 48 | 5240 MHz | Available | Available | Available | Available | Available | Available |
| **W53 channel set** | Channel 52 | 5260 MHz | Available | Available | Available | Available | Available | Available |
| | Channel 56 | 5280 MHz | Available | Available | Available | Available | Available | Available |
| | Channel 60 | 5300 MHz | Available | Available | Available | Available | Available | Available |
| | Channel 64 | 5320 MHz | Available | Available | Available | Available | Available | Available |
| **W56 channel set** | Channel 100 | 5500 MHz | Available | Available | Available | Available | Disabled | Available |
| | Channel 104 | 5520 MHz | Available | Available | Available | Available | Disabled | Available |
| | Channel 108 | 5540 MHz | Available | Available | Available | Available | Disabled | Available |
| | Channel 112 | 5560 MHz | Available | Available | Available | Available | Disabled | Available |
| | Channel 116 | 5580 MHz | Available | Available | Available | Available | Disabled | Available |
| | Channel 120 | 5600 MHz | Available | Available | Available | Available | Disabled | Available |
| | Channel 124 | 5620 MHz | Available | Available | Available | Available | Disabled | Available |
| | Channel 128 | 5640 MHz | Available | Available | Available | Available | Disabled | Available |
| | Channel 132 | 5660 MHz | Available | Available | Available | Available | Disabled | Available |
| | Channel 136 | 5680 MHz | Available | Available | Available | Available | Disabled | Available |
| | Channel 140 | 5700 MHz | Available | Available | Available | Available | Disabled | Available |
| | Channel 144 | 5720 MHz | Available | Disabled | Disabled | Available | Disabled | Disabled |
| **W58 channel set** | Channel 149 | 5745 MHz | Available | Disabled | Disabled | Available | Available | Available |
| | Channel 153 | 5765 MHz | Available | Disabled | Disabled | Available | Available | Available |
| | Channel 157 | 5785 MHz | Available | Disabled | Disabled | Available | Available | Available |
| | Channel 161 | 5805 MHz | Available | Disabled | Disabled | Available | Available | Available |
| | Channel 165 | 5825 MHz | Available | Disabled | Disabled | Available | Available | Available |

EP 3 541 035 B1

4

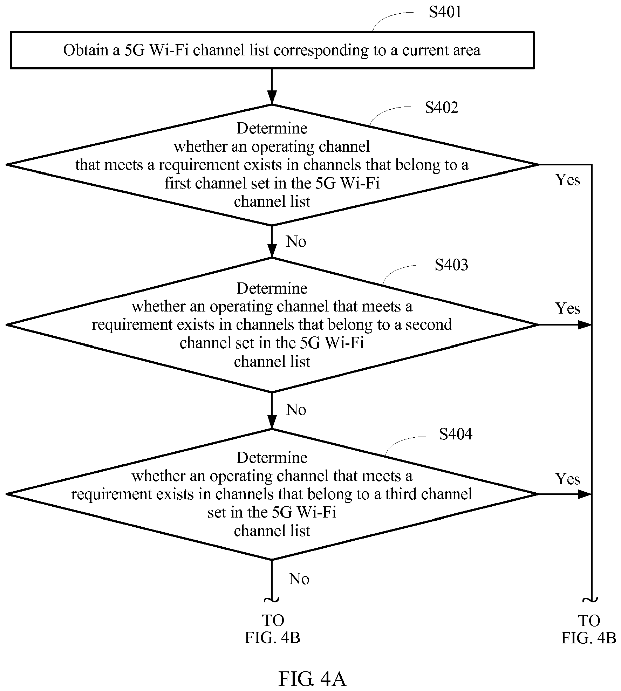

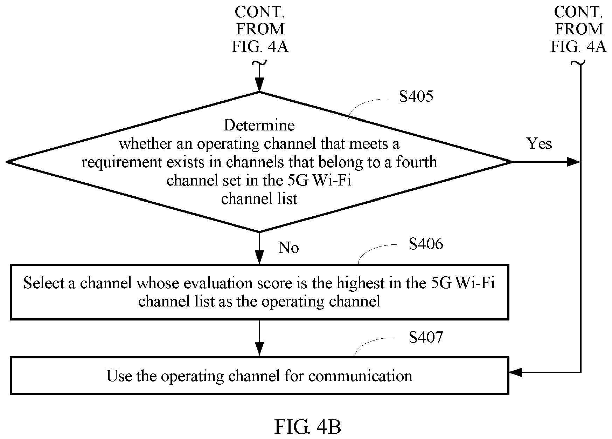

Referring to FIG. 4A and FIG. 4B, FIG. 4A and FIG. 4B are a schematic flowchart of a channel selection method according to this application. The method includes the following steps.

Step S401: Obtain a 5 GHz Wi-Fi channel list corresponding to a current area.

Specifically, the 5 GHz Wi-Fi channel list corresponding to the current area is a set of 5 GHz channels that are allowed for use by laws and regulations of the area in which a Wi-Fi device is located. 5 GHz channels that are opened and allowed to be used in different areas are different. For example, 5 GHz channels that are opened and allowed to be used in the United States include {channel 36, channel 40, channel 44, channel 48, channel 52, channel 56, channel 60, channel 64, channel 100, channel 104, channel 108, channel 112, channel 116, channel 120, channel 124, channel 128, channel 132, channel 136, channel 140, channel 144, channel 149, channel 153, channel 157, channel 161, channel 165}; and 5 GHz channels that are opened and allowed to be used in China include {channel 36, channel 40, channel 44, channel 48, channel 52, channel 56, channel 60, channel 64, channel 149, channel 153, channel 157, channel 161, channel 165}. For details, refer to Table 1. Table 1 shows available 5 GHz channels opened by some areas. Because 5 GHz channels that are opened and allowed to be used in different areas are different, the Wi-Fi device first needs to obtain a list of available 5 GHz Wi-Fi channels of a current area when operating in different areas. Then, the Wi-Fi device can select a current operating channel from the channels that are allowed to be used in the current area.

In an optional solution, the Wi-Fi device stores lists of available 5 GHz Wi-Fi channels of various areas. The Wi-Fi device may determine an area in which the Wi-Fi device is located, to determine a list of 5 GHz channels currently available to the Wi-Fi device. For example, the Wi-Fi device may obtain a list of available 5 GHz Wi-Fi channels of a current area based on an identifier of the current area. The identifier of the current area may be an English abbreviation of the area, a country code or an area code, a country code or an area code, or the like that can uniquely identify the area. For example, the Wi-Fi device is used in the United States. A country code of the United States is USA. Therefore, the Wi-Fi device may determine, by using the country code USA, that a list of available 5 GHz Wi-Fi channels of the United States is {channel 36, channel 40, channel 44, channel 48, channel 52, channel 56, channel 60, channel 64, channel 100, channel 104, channel 108, channel 112, channel 116, channel 120, channel 124, channel 128, channel 132, channel 136, channel 140, channel 144, channel 149, channel 153, channel 157, channel 161, channel 165}.

In another optional solution, the Wi-Fi device may obtain a list of available 5 GHz Wi-Fi channels of a current area from another device connected to the Wi-Fi device. For example, the Wi-Fi device may obtain the list of available 5 GHz Wi-Fi channels of the current area from a connected wireless AP by sending a channel list request.

Step S402: Determine whether an operating channel that meets a requirement exists in channels that belong to a first channel set in the 5 GHz Wi-Fi channel list.

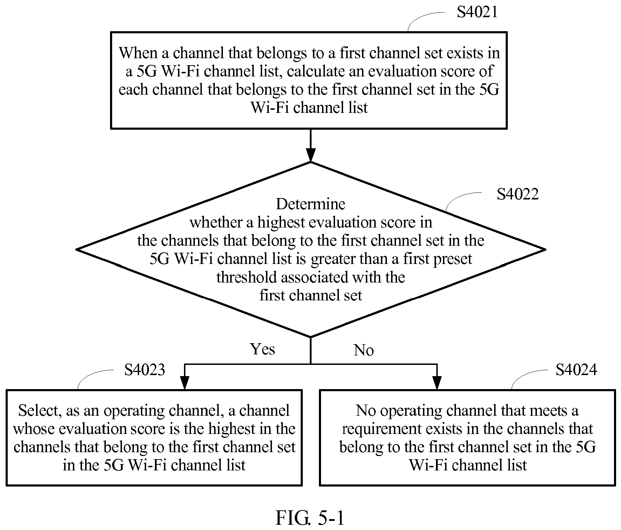

How to determine whether an operating channel that meets the requirement exists in the channels that belong to the first channel set in the 5 GHz Wi-Fi channel list, in other words, whether a current operating channel can be selected from the first channel set, is described with reference to FIG. 5-1. FIG. 5-1 is a schematic flowchart of determining whether the current operating channel can be selected from the first channel set according to this application. The following steps are included.

Specifically, the Wi-Fi device first needs to determine whether a channel that belongs to the first channel set exists in the 5 GHz Wi-Fi channel list. Each channel in the first channel set is an outdoor non-DFS channel. Determining whether a channel that belongs to the first channel set exists in the 5 GHz Wi-Fi channel list is equivalent to performing an intersection operation on the 5 GHz Wi-Fi channel list and the first channel set, to find out a channel that not only exists in the 5 GHz Wi-Fi channel list but also belongs to the first channel set.

In a possible solution, the first channel set is a W58 channel set. To be specific, the first channel set is {channel 149, channel 153, channel 157, channel 161, channel 165}. For example, an area in which the Wi-Fi device is currently located is the United States. In the 5 GHz Wi-Fi channel list {channel 36, channel 40, channel 44, channel 48, channel 52, channel 56, channel 60, channel 64, channel 100, channel 104, channel 108, channel 112, channel 116, channel 120, channel 124, channel 128, channel 132, channel 136, channel 140, channel 144, channel 149, channel 153, channel 157, channel 161, channel 165} corresponding to the United States, channels that belong to the first channel set exist, that is, {channel 149, channel 153, channel 157, channel 161, channel 165}.

Step S4021: When a channel that belongs to the first channel set exists in the 5 GHz Wi-Fi channel list, calculate an evaluation score of each channel that belongs to the first channel set in the 5 GHz Wi-Fi channel list, where the evaluation score directly reflects link quality of each channel.

When no channel that belongs to the first channel set exists in the 5 GHz Wi-Fi channel list, step S403 is performed. In a possible solution, the evaluation score of each channel may be calculated by using the following method.

The Wi-Fi device scans each channel that belongs to the first channel set in a list of available 5 GHz Wi-Fi channels of a current area, to obtain an evaluation parameter of each channel. The Wi-Fi device may scan, through active scanning (Active Scanning) or passive scanning (Passive Scanning), each channel that belongs to the first channel set in the 5 GHz Wi-Fi channel list, to obtain the evaluation parameter of each channel. It is assumed that a current country is the United States. The Wi-Fi device scans channels that belong to the first channel set in the 5 GHz list corresponding to the United States, that is, {channel 149, channel 153, channel 157, channel 161, channel 165}. For example, the Wi-Fi device scans the channel 149. When actively scanning the channel 149, the Wi-Fi device obtains a right of use of the channel 149 through carrier sense multiple access with collision detection (Carrier Sense Multiple Access with Collision Detection, CSMA/CD), sends a beacon frame including a Media Access Control MAC address of the Wi-Fi device, and starts a probe timer. The Wi-Fi device waits for a probe reply within a maximum channel waiting delay (Max Channel Time), records all replies received within the maximum channel waiting delay, and obtains an evaluation parameter of the channel 149 from the replies. The Wi-Fi device switches to a next channel after the probe timer expires, and repeats the foregoing operations until all the channels that belong to the first channel set in the 5 GHz list corresponding to the United States are scanned.

When passively scanning the channel 149, the Wi-Fi device may receive a beacon frame sent by a wireless AP on the channel 149, and parses the beacon frame, to obtain an evaluation parameter of the channel 149. The Wi-Fi device may obtain, by using the passive scanning method, evaluation parameters of all the channels that belong to the first channel set in the 5 GHz Wi-Fi channel list corresponding to the United States.

The evaluation parameter may include parameters that reflect channel quality, such as a quantity of BSs/wireless APs that are operating on the channel, duration in which a BS/a wireless AP transmits data on the channel, a quantity of basic service sets (Basic Service Set, BSS) on the channel, duration in which a basic service set transmits data on the channel, a status of interference of a wireless access point to another wireless access point when the another wireless access point operates on the channel, a quantity of cyclic redundancy check (Cyclic Redundancy Check, CRC) error packets received on the channel, background noise on the channel, and the like. A specific quantity and types of evaluation parameters of each channel that are obtained by the Wi-Fi device may be preset, or may be correspondingly adjusted based on a specific situation such as a country in which the Wi-Fi device is currently located or a user requirement.

Scores of the evaluation parameters of each channel are separately calculated based on the evaluation parameters of each channel. It is assumed that each channel has N evaluation parameters. After N evaluation parameters of each channel that belongs to the first channel set in the 5 GHz Wi-Fi channel list corresponding to the current area are obtained, scores of the N evaluation parameters of each channel are separately calculated. The Wi-Fi device calculates the scores of the N evaluation parameters of each channel based on a specific situation of each evaluation parameter of the channel. For example, in an optional solution, if a 100-point scale is used, a scoring rule of an evaluation parameter of the quantity of wireless APs that are operating on the channel may be shown in Table 2.

**Table 2**

| Quantity of APs | First preset range | Second preset range | Third preset range | Fourth preset range | Fifth preset range | Sixth preset range | Seventh preset range | Eighth preset range | Ninth preset range | Tenth preset range |
|---|---|---|---|---|---|---|---|---|---|---|
| **Score** | 10 | 20 | 30 | 40 | 50 | 60 | 70 | 80 | 90 | 100 |

The channel 149 is used as an example. Assuming that there are a wireless access points operating on the channel 149, and a falls within the seventh preset range, a score of the evaluation parameter (the quantity of wireless APs that are operating on the channel) on the channel 149 is 70. Table 2 is a schematic table of a score of an evaluation parameter. Specifically, a scoring status of each evaluation parameter may be correspondingly changed based on a specific situation such as a country in which the Wi-Fi device is currently located or a user requirement. Table 2 shows only the scoring rule of the evaluation parameter of the quantity of wireless APs that are operating on the channel. A scoring rule of another evaluation parameter of the channel is similar to the scoring rule shown in Table 2. Details are not described herein again.

An evaluation score of each channel is calculated based on a score of each evaluation parameter of the channel and a weight factor that is corresponding to each evaluation parameter. Specifically, in this application, a same quantity and same types of evaluation parameters are obtained for all the channels that belong to the first channel set in the 5 GHz Wi-Fi channel list corresponding to the current area. A corresponding weight factor is allocated to a same evaluation parameter based on importance of the evaluation parameter. The weight factor is the same for all the channels.

In an optional solution, the evaluation score may be calculated by using a formula 1-1. The formula 1-1 is as follows:

$$S(i) = \frac{a1_i * f1 + a2_i * f2 + \cdots + aN_i * fN}{f1 + f2 + f3 + \cdots + fN} \quad 1\text{-}1$$

where S(i) is an evaluation score of a channel numbered i in the channels that belong to the first channel set in the 5 GHz Wi-Fi channel list corresponding to the current area of the Wi-Fi device. Evaluation scores of the channels that belong to the first channel set in the 5 GHz Wi-Fi channel list corresponding to the current area are obtained by separately using channel numbers corresponding to the channels that belong to the first channel set in the 5 GHz Wi-Fi channel list, as i, where $a1_i$ is a score of a first evaluation parameter on a channel i, $a2_i$ is a score of a second evaluation parameter on the channel i, $aN_i$ is a score of an $N^{th}$ evaluation parameter on the channel i, f1 is a weight factor corresponding to the first evaluation parameter, f2 is a weight factor corresponding to the second evaluation parameter, and fN is a weight factor corresponding to the $N^{th}$ evaluation parameter.

The formula 1-1 is equivalent to performing weighted summation on evaluation parameters of the channel i, and can reflect channel quality of the channel i that belongs to the first channel set in the 5 GHz Wi-Fi channel list corresponding to the area in which the Wi-Fi device is currently located.

Step S4022: After obtaining, through calculation, the evaluation scores of the channels that belong to the first channel set in the 5 GHz Wi-Fi channel list, a Wi-Fi device determines whether a highest evaluation score in the channels that belong to the first channel set in the 5 GHz Wi-Fi channel list is greater than a first preset threshold associated with the first channel set.

Step S4023: If the highest evaluation score in the channels that belong to the first channel set in the 5 GHz Wi-Fi channel list is greater than the first preset threshold associated with the first channel set, select, as the operating channel, a channel whose evaluation score is the highest in the channels that belong to the first channel set in the 5 GHz Wi-Fi channel list.

The first preset threshold is a minimum quality threshold of the first channel set. If a channel whose evaluation score is less than the first preset threshold exists in the channels that belong to the first channel set in the 5 GHz Wi-Fi channel list corresponding to the current area, it indicates that link quality of the channel is poor, and cannot meet the minimum quality threshold of the first channel set.

In an optional solution, the preset threshold may be obtained by using a formula 1-2. The formula 1-2 is as follows:

$$T(1) = \frac{a1*f1+a2*f2+\cdots+aN*fN}{f1+f2+f3+\cdots+fN} \quad 1\text{-}2$$

where T(1) is the first preset threshold corresponding to the first channel set, a1 is a score of the first evaluation parameter that meets minimum channel quality in the first channel set, a2 is a score of the second evaluation parameter that meets the minimum channel quality in the first channel set, a3 is a score of the $N^{th}$ evaluation parameter that meets the minimum channel quality in the first channel set, f1 is a weight factor corresponding to the first evaluation factor, f2 is a weight factor corresponding to the second evaluation parameter, and fN is a weight factor corresponding to the $N^{th}$ evaluation parameter. The formula 1-2 is equivalent to performing weighted summation on all evaluation parameters of channels that meet the minimum channel quality in the first channel set, to reflect the minimum quality threshold of the first channel set.

The first preset threshold may be customized based on a specific requirement of the Wi-Fi device. When a relatively large first preset threshold is set, if a current operating channel is selected from channels that belong to the first channel set in the 5 GHz Wi-Fi channel list corresponding to the current area, quality of the current operating channel is relatively high.

Specifically, for example, the current area is the United States. It is assumed that a channel whose score is the highest in the channels that belong to the first channel set (the W58 channel set) in the 5 GHz Wi-Fi channel list corresponding to the United States is the channel 149, an evaluation score of the channel 149 is S(149), and the first preset threshold associated with the first channel set is T(1). If S(149)>T(1), the channel 149 is selected as the current operating channel of the Wi-Fi device.

Step S4024: If the highest evaluation score in the channels that belong to the first channel set in the 5 GHz Wi-Fi channel list is less than or equal to the first preset threshold associated with the first channel set, select no operating channel from the channels that belong to the first channel set in the 5 GHz Wi-Fi channel list, and perform step S403.

Step S403: Determine whether an operating channel that meets a requirement exists in channels that belong to a second channel set in the 5 GHz Wi-Fi channel list.

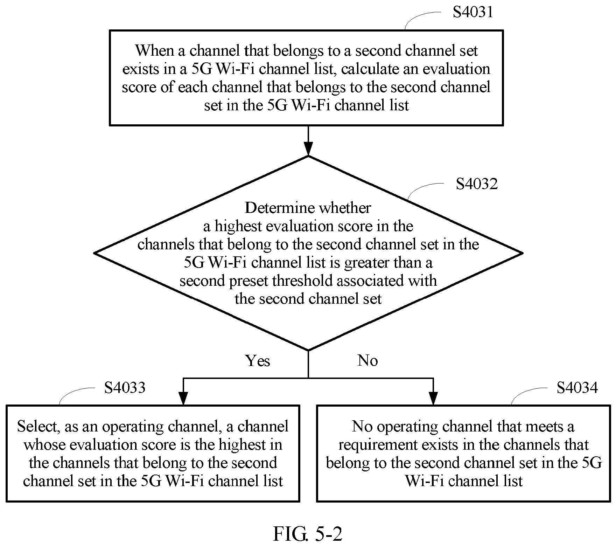

How to determine whether an operating channel that meets the requirement exists in the channels that belong to the second channel set in the 5 GHz Wi-Fi channel list, in other words, whether a current operating channel can be selected from the second channel set, is described with reference to FIG. 5-2. FIG. 5-2 is a flowchart of determining whether the current operating channel can be selected from the second channel set according to this application. The following steps are included.

First, whether a channel that belongs to the second channel set exists in the 5 GHz Wi-Fi channel list is determined. Each channel in the second channel set is an outdoor DFS channel. Determining whether a channel that belongs to the second channel set exists in the 5 GHz Wi-Fi channel list is equivalent to performing an intersection operation on the 5 GHz Wi-Fi channel list and the second channel set, to find out a channel that not only exists in the 5 GHz Wi-Fi channel list but also belongs to the second channel set.

In a possible solution, the second channel set is a W56 channel set. To be specific, the second channel set is {channel 100, channel 104, channel 108, channel 112, channel 116, channel 120, channel 124, channel 128, channel 132, channel 136, channel 140, channel 144}. For example, an area in which the Wi-Fi device is currently located is the United States. Channels that belong to the second channel set exist in the 5 GHz Wi-Fi channel list corresponding to the United States: {channel 100, channel 104, channel 108, channel 112, channel 116, channel 120, channel 124, channel 128, channel 132, channel 136, channel 140, channel 144}.

Step S4031: When a channel that belongs to the second channel set exists in the 5 GHz Wi-Fi channel list, calculate an evaluation score of each channel that belongs to the second channel set in the 5 GHz Wi-Fi channel list. It should be noted that an operation of calculating the evaluation score of each channel that belongs to the second channel set in the 5 GHz Wi-Fi channel list is similar to a principle in step S402. Details are not described herein again.

Step S4032: After obtaining the evaluation scores of all the channels that belong to the second channel set in the 5 GHz Wi-Fi channel list, the Wi-Fi device determines whether a highest evaluation score in the channels that belong to the second channel set in the 5 GHz Wi-Fi channel list is greater than a second preset threshold associated with the second channel set.

The second preset threshold is a minimum quality threshold of the second channel set. If a channel whose evaluation score is less than the second preset threshold exists in the channels that belong to the second channel set in the 5 GHz Wi-Fi channel list corresponding to the current area, it indicates that link quality of the channel is poor, and cannot meet the minimum quality threshold of the second channel set.

In an optional solution, the second preset threshold may be obtained by using a method similar to the formula 1-2. The second preset threshold may be customized based on a specific requirement of the Wi-Fi device. When a relatively large second preset threshold is set, if a current operating channel is selected from channels that belong to the second channel set in the 5 GHz WIFI channel list corresponding to the current area, quality of the current operating channel is relatively high.

Step S4033: If the highest evaluation score in the channels that belong to the second channel set in the 5 GHz Wi-Fi channel list is greater than the second preset threshold corresponding to the second channel set, the Wi-Fi device selects, as the operating channel, a channel whose evaluation score is the highest in the channels that belong to the second channel set in the 5 GHz Wi-Fi channel list.

Specifically, for example, an area in which the Wi-Fi device is currently located is the United States. It is assumed that a channel whose score is the highest in the channels that belong to the second channel set (the W56 channel set) in the 5 GHz Wi-Fi channel list corresponding to the United States is the channel 100, an evaluation score of the channel 100 is S(100), and the second preset threshold associated with the second channel set is T(2). If S(100)>T(2), the channel 100 is selected as the current operating channel of the Wi-Fi device.

Step S4034: If the highest evaluation score in the channels that belong to the second channel set in the 5 GHz Wi-Fi channel list is less than or equal to the second preset threshold associated with the second channel set, no operating channel that meets the requirement exists in the channels that belong to the second channel set in the 5 GHz Wi-Fi channel list, in other words, no current operating channel is selected, and step S404 is performed.

Step S404: Determine whether an operating channel that meets a requirement exists in channels that belong to a third channel set in the 5 GHz Wi-Fi channel list.

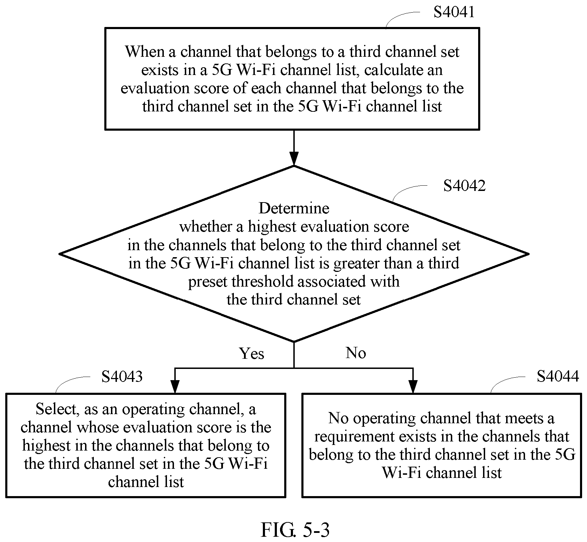

How to determine whether an operating channel that meets the requirement exists in the channels that belong to the third channel set in the 5 GHz Wi-Fi channel list, in other words, whether a current operating channel can be selected from the third channel set, is described with reference to FIG. 5-3. FIG. 5-3 is a schematic flowchart of determining whether the current operating channel can be selected from the third channel set according to this application. The following steps are included.

First, whether a channel that belongs to the third channel set exists in the 5 GHz Wi-Fi channel list is determined. Each channel in the third channel set is an indoor non-DFS channel. Determining whether a channel that belongs to the third channel set exists in the 5 GHz Wi-Fi channel list is equivalent to performing an intersection operation on the 5 GHz Wi-Fi channel list and the third channel set, to find out a channel that not only exists in the 5 GHz Wi-Fi channel list but also belongs to the third channel set.

In a possible solution, the third channel set is a W52 channel set. To be specific, the third channel set is {channel 36, channel 40, channel 44, channel 48}. For example, an area in which the Wi-Fi device is currently located is the United States. Channels that belong to the third channel set exist in the 5 GHz Wi-Fi channel list corresponding to the United States: {channel 36, channel 40, channel 44, channel 48}.

Step S4041: When a channel that belongs to the third channel set exists in the 5 GHz Wi-Fi channel list, calculate an evaluation score of each channel that belongs to the third channel set in the 5 GHz Wi-Fi channel list. It should be noted that an operation of calculating the evaluation score of each channel that belongs to the third channel set in the 5 GHz Wi-Fi channel list is similar to a principle in step S402. Details are not described herein again.

Step S4042: After obtaining, through calculation, the evaluation scores of all the channels that belong to the third channel set in the 5 GHz Wi-Fi channel list, the Wi-Fi device determines whether a highest evaluation score in the channels that belong to the third channel set in the 5 GHz Wi-Fi channel list is greater than a third preset threshold associated with the third channel set.

The third preset threshold is a minimum quality threshold of the third channel set. If a channel whose evaluation score is less than the third preset threshold exists in the channels that belong to the third channel set in the 5 GHz Wi-Fi channel list corresponding to the current area, it indicates that link quality of the channel is poor, and cannot meet the minimum quality threshold of the third channel set.

In an optional solution, the third preset threshold may be obtained by using a method similar to the formula 1-2. The third preset threshold may be customized based on a specific requirement of the Wi-Fi device. When a relatively large third preset threshold is set, if a current operating channel is selected from the channels that belong to the third channel set in the 5 GHz Wi-Fi channel list associated with the current area, quality of the current operating channel is relatively high.

Step S4043: If the highest evaluation score in the channels that belong to the third channel set in the 5 GHz Wi-Fi channel list is greater than the third preset threshold corresponding to the third channel set, select, as the operating channel, a channel whose evaluation score is the highest in the channels that belong to the third channel set in the 5 GHz Wi-Fi channel list.

Specifically, for example, an area in which the Wi-Fi device is currently located is the United States. It is assumed that a channel whose score is the highest in the channels that belong to the third channel set (the W52 channel set) in the 5 GHz Wi-Fi channel list corresponding to the United States is the channel 36, an evaluation score of the channel 36 is S(36), and the third preset threshold associated with the third channel set is T(3). If S(36)>T(3), the channel 36 is selected as the current operating channel of the Wi-Fi device.

Step S4044: If the highest evaluation score in the channels that belong to the third channel set in the 5 GHz Wi-Fi channel list is less than or equal to the third preset threshold associated with the third channel set, no operating channel that meets the requirement exists in the channels that belong to the third channel set in the 5 GHz Wi-Fi channel list, in other words, no current operating channel is selected, and perform step S405.

Step S405: Determine whether an operating channel that meets a requirement exists in channels that belong to a fourth channel set in the 5 GHz Wi-Fi channel list.

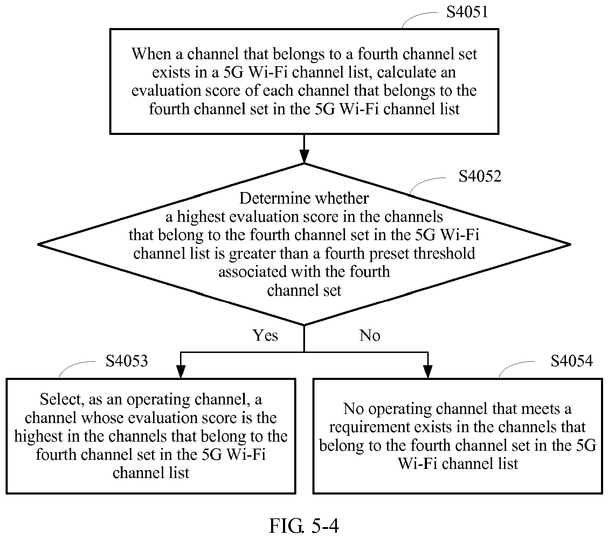

How to determine whether an operating channel that meets the requirement exists in the channels that belong to the fourth channel set in the 5 GHz Wi-Fi channel list, in other words, whether a current operating channel can be selected from the fourth channel set, is described with reference to FIG. 5-4. FIG. 5-4 is a schematic flowchart of determining whether the current operating channel can be selected from the fourth channel set according to this application. The following steps are included.

First, whether a channel that belongs to the fourth channel set exists in the 5 GHz Wi-Fi channel list is determined. Each channel in the fourth channel set is an indoor DFS channel. Determining whether a channel that belongs to the fourth channel set exists in the 5 GHz Wi-Fi channel list is equivalent to performing an intersection operation on the 5 GHz Wi-Fi channel list and the fourth channel set, to find out a channel that not only exists in the 5 GHz Wi-Fi channel list but also belongs to the fourth channel set.

In a possible solution, the fourth channel set is a W53 channel set. To be specific, the fourth channel set is {channel 52, channel 56, channel 60, channel 64}. For example, an area in which the Wi-Fi device is currently located is the United States. Channels that belong to the fourth channel set exist in the 5 GHz Wi-Fi channel list corresponding to the United States: {channel 52, channel 56, channel 60, channel 64}.

Step S4051: When a channel that belongs to the fourth channel set exists in the 5 GHz Wi-Fi channel list, calculate an evaluation score of each channel that belongs to the fourth channel set in the 5 GHz Wi-Fi channel list. It should be noted that an operation of calculating the evaluation score of each channel that belongs to the fourth channel set in the 5 GHz Wi-Fi channel list is similar to that in step S402. Details are not described herein again.

Step S4052: After obtaining the evaluation scores of all the channels that belong to the fourth channel set in the 5 GHz Wi-Fi channel list, the Wi-Fi device determines whether a highest evaluation score in the channels that belong to the fourth channel set in the 5 GHz Wi-Fi channel list is greater than a fourth preset threshold associated with the fourth channel set.

The fourth preset threshold is a minimum quality threshold of the fourth channel set. If a channel whose evaluation score is less than the fourth preset threshold exists in the channels that belong to the fourth channel set in the 5 GHz Wi-Fi channel list corresponding to the current area, it indicates that link quality of the channel is poor, and cannot meet the minimum quality threshold of the fourth channel set.

In an optional solution, the fourth preset threshold may be obtained by using a method similar to the formula 1-2. The fourth preset threshold may be customized based on a specific requirement of the Wi-Fi device. When a relatively large fourth preset threshold is set, if a current operating channel is selected from the channels that belong to the fourth channel set in the 5 GHz Wi-Fi channel list associated with the current area, quality of the current operating channel is relatively high.

Step S4053: If the highest evaluation score in the channels that belong to the fourth channel set in the 5 GHz Wi-Fi channel list is greater than the fourth preset threshold associated with the fourth channel set, select, as the operating channel, a channel whose evaluation score is the highest in the channels that belong to the fourth channel set in the 5 GHz Wi-Fi channel list.

Specifically, for example, an area in which the Wi-Fi device is currently located is the United States. It is assumed that a channel whose score is the highest in the channels that belong to the fourth channel set (the W53 channel set) in the 5 GHz Wi-Fi channel list corresponding to the United States is the channel 52, an evaluation score of the channel 52 is S(52), and the fourth preset threshold associated with the fourth channel set is T(4). If S(52)>T(4), the channel 52 is selected as the current operating channel of the Wi-Fi device.

Step S4054: If the highest evaluation score in the channels that belong to the fourth channel set in the 5 GHz Wi-Fi channel list is less than or equal to the fourth preset threshold associated with the fourth channel set, no operating channel that meets the requirement exists in the channels that belong to the fourth channel set in the 5 GHz Wi-Fi channel list, in other words, no current operating channel is selected, and step S406 is performed.

Step S406: Select a channel whose evaluation score is the highest in the 5 GHz Wi-Fi channel list as the operating channel.

Specifically, when no current operating channel that meets the requirement is selected from channels that belong to the first channel set, the second channel set, the third channel set, and the fourth channel set in the 5 GHz Wi-Fi channel list, an optimal quality channel is directly selected from the 5 GHz Wi-Fi channel list as the current operating channel. The optimal quality channel can be selected through score evaluation.

For example, an area in which the Wi-Fi device is currently located is the United States. Assuming that a channel whose evaluation score is the highest in the 5 GHz Wi-Fi channel list that is allowed to be used in the United States is the channel 64, the Wi-Fi device selects the channel 64 as the current operating channel.

Step S407: Use the operating channel for communication.

In the method described in FIG. 4A and FIG. 4B, the Wi-Fi device can preferentially select an outdoor non-DFS channel as the current operating channel, to avoid cases in which regulatory domain requirements of some countries are violated when the Wi-Fi device selects an indoor channel but operates outside, a user terminal that does not support the indoor channel cannot scan an AP, and user experience is affected because the user terminal cannot scan and access an AP in a radar signal detection phase when the user terminal selects a DFS channel. In addition, the selected current operating channel is a channel that has optimal channel quality in the first channel set, the second channel set, the third channel set, or the fourth channel set, so that channel quality is ensured.

The method in this application is described in detail above. For ease of better implementing the foregoing solution in this application, an apparatus in this application is correspondingly provided below.

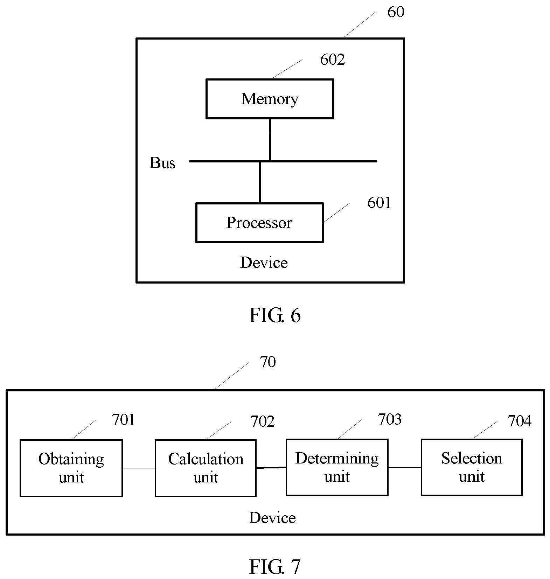

Referring to FIG. 6, FIG. 6 is a device 60 according to this application. The device 60 includes a processor 601 and a memory 602. The processor 601 and the memory 602 are connected to each other by using a bus.

The memory 602 includes but is not limited to a random access memory (English: Random Access Memory, RAM for short), a read-only memory (English: Read-Only Memory, ROM for short), an erasable programmable read only memory (English: Erasable Programmable Read Only Memory, EPROM for short), or a compact disc read-only memory (English: Compact Disc Read-Only Memory, CD-ROM for short). The memory 602 is configured to store related instructions and data.

The processor 601 may be one or more central processing units (English: Central Processing Unit, CPU for short). When the processor 601 is one CPU, the CPU may be a single-core CPU or a multi-core CPU.

The processor 601 in the device 40 is configured to read program code stored in the memory 602 to perform the following operations:

obtaining a 5 GHz Wi-Fi channel list corresponding to a current area;
when a channel that belongs to a first channel set exists in the 5 GHz Wi-Fi channel list, calculating an evaluation score of each channel that belongs to the first channel set in the 5 GHz Wi-Fi channel list, where each channel in the first channel set is an outdoor non-DFS channel, and in a possible solution, the first channel set is a W58 channel set;
determining whether a highest evaluation score in the channels that belong to the first channel set in the 5 GHz Wi-Fi channel list is greater than a first preset threshold associated with the first channel set; and
if the highest evaluation score in the channels that belong to the first channel set in the 5 GHz Wi-Fi channel list is greater than the first preset threshold associated with the first channel set, selecting, as a current operating channel, a channel whose evaluation score is the highest in the channels that belong to the first channel set in the 5 GHz Wi-Fi channel list.

In the foregoing operations, the device 60 can select an optimal quality channel from outdoor non-DFS channels as the current operating channel, to avoid cases in which another device is affected when the device 60 selects an indoor channel but operates outside, and the device 60 cannot access an AP in a radar signal detection process when the device 60 selects a DFS channel.

In an optional solution, the following operations are performed: if the highest evaluation score in the channels that belong to the first channel set in the 5 GHz Wi-Fi channel list is less than or equal to the first preset threshold associated with the first channel set, when a channel that belongs to a second channel set exists in the 5 GHz Wi-Fi channel list, calculating an evaluation score of each channel that belongs to the second channel set in the 5 GHz Wi-Fi channel list, where each channel in the second channel set is an outdoor DFS channel, and in a possible solution, the second channel set is a W56 channel set;

determining whether a highest evaluation score in the channels that belong to the second channel set in the 5 GHz Wi-Fi channel list is greater than a second preset threshold associated with the second channel set; and
if the highest evaluation score in the channels that belong to the second channel set in the 5 GHz Wi-Fi channel list is greater than the second preset threshold associated with the second channel set, selecting, as the current operating channel, a channel whose evaluation score is the highest in the channels that belong to the second channel set in the 5 GHz Wi-Fi channel list.

In another optional solution, the following operations are performed: if the highest evaluation score in the channels that belong to the second channel set in the 5 GHz Wi-Fi channel list is less than or equal to the second preset threshold associated with the second channel set, when a channel that belongs to a third channel set exists in the 5 GHz Wi-Fi channel list, calculating an evaluation score of each channel that belongs to the third channel set in the 5 GHz Wi-Fi channel list, where each channel in the third channel set is an indoor non-DFS channel, and in a possible implementation, the third channel set is a W52 channel set;

determining whether a highest evaluation score in the channels that belong to the third channel set in the 5 GHz Wi-Fi channel list is greater than a third preset threshold associated with the third channel set; and
if the highest evaluation score in the channels that belong to the third channel set in the 5 GHz Wi-Fi channel list is greater than the third preset threshold associated with the third channel set, selecting, as the current operating channel, a channel whose evaluation score is the highest in the channels that belong to the third channel set in the 5 GHz Wi-Fi channel list.

In another optional solution, the following operations are performed: if the highest evaluation score in the channels that belong to the third channel set in the 5 GHz Wi-Fi channel list is less than or equal to the third preset threshold associated with the third channel set, when a channel that belongs to a fourth channel set exists in the 5 GHz Wi-Fi channel list, calculating an evaluation score of each channel that belongs to the fourth channel set in the 5 GHz Wi-Fi channel list, where each channel in the fourth channel set is an indoor DFS channel, and in a possible solution, the fourth channel set is a W53 channel set;

determining whether a highest evaluation score in the channels that belong to the fourth channel set in the 5 GHz Wi-Fi channel list is greater than a fourth preset threshold associated with the fourth channel set; and
if the highest evaluation score in the channels that belong to the fourth channel set in the 5 GHz Wi-Fi channel list is greater than the fourth preset threshold associated with the fourth channel set, selecting, as the current operating channel, a channel whose evaluation score is the highest in the channels that belong to the fourth channel set in the 5 GHz Wi-Fi channel list.

In another optional solution, the following operation is performed: if the highest evaluation score in the channels that belong to the fourth channel set in the 5 GHz Wi-Fi channel list is less than or equal to the fourth preset threshold associated with the fourth channel set, selecting a channel whose evaluation score is the highest in the 5 GHz Wi-Fi channel list as the current operating channel.

In another optional solution, the calculating an evaluation score of each channel that belongs to the first channel set in the 5 GHz Wi-Fi channel list includes: scanning each channel that belongs to the first channel set in the 5 GHz Wi-Fi channel list, to obtain an evaluation parameter of each channel; and calculating the evaluation score of each channel based on the evaluation parameter of each channel.

For specific implementation of the device 60 in this application, refer to corresponding description in the method embodiment shown in FIG. 4A and FIG. 4B.

The device 60 described in FIG. 6 can preferentially select an optimal quality channel from outdoor non-DFS channels as the current operating channel, to avoid cases in which another device is affected when the device 60 selects an indoor channel but operates outside, and the device 60 cannot access an AP in a radar signal detection process when the device 60 selects a DFS channel.

Referring to FIG. 7, FIG. 7 is a schematic structural diagram of another device 70 according to this application. The device 70 may include an obtaining unit 701, a calculation unit 702, a determining unit 703, and a selection unit 704. Details are described as follows:

The obtaining unit 701 is configured to obtain a 5 GHz Wi-Fi channel list corresponding to a current area.

The calculation unit 702 is configured to: when a channel that belongs to a first channel set exists in the 5 GHz Wi-Fi channel list, calculate an evaluation score of each channel that belongs to the first channel set in the 5 GHz Wi-Fi channel list, where each channel in the first channel set is an outdoor non-DFS channel.

The determining unit 703 is configured to determine whether a highest evaluation score in the channels that belong to the first channel set in the 5 GHz Wi-Fi channel list is greater than a first preset threshold associated with the first channel set.

The selection unit 704 is configured to: if the highest evaluation score in the channels that belong to the first channel set in the 5 GHz Wi-Fi channel list is greater than the first preset threshold associated with the first channel set, select, as a current operating channel, a channel whose evaluation score is the highest in the channels that belong to the first channel set in the 5 GHz Wi-Fi channel list.

The foregoing units run, so that the device 70 can preferentially select an optimal quality channel from outdoor non-DFS channels as the current operating channel, to avoid cases in which another device is affected when the device 70 selects an indoor channel but operates outside, and the device 70 cannot access a network in a radar signal detection process when the device 70 selects a DFS channel.

In an optional solution, the calculation unit 702 is further configured to: if the highest evaluation score in the channels that belong to the first channel set in the 5 GHz Wi-Fi channel list is less than or equal to the first preset threshold associated with the first channel set, when a channel that belongs to a second channel set exists in the 5 GHz Wi-Fi channel list, calculate an evaluation score of each channel that belongs to the second channel set in the 5 GHz Wi-Fi channel list, where each channel in the second channel set is an outdoor DFS channel.

The determining unit 703 is further configured to determine whether a highest evaluation score in the channels that belong to the second channel set in the 5 GHz Wi-Fi channel list is greater than a second preset threshold associated with the second channel set.

The selection unit 704 is further configured to: if the highest evaluation score in the channels that belong to the second channel set in the 5 GHz Wi-Fi channel list is greater than the second preset threshold associated with the second channel set, select, as the current operating channel, a channel whose evaluation score is the highest in the channels that belong to the second channel set in the 5 GHz Wi-Fi channel list.

In another optional solution, the calculation unit 702 is further configured to: if the highest evaluation score in the channels that belong to the second channel set in the 5 GHz Wi-Fi channel list is less than or equal to the second preset threshold associated with the second channel set, when a channel that belongs to a third channel set exists in the 5 GHz Wi-Fi channel list, calculate an evaluation score of each channel that belongs to the third channel set in the 5 GHz Wi-Fi channel list, where each channel in the third channel set is an indoor non-DFS channel.

The determining unit 703 is further configured to determine whether a highest evaluation score in the channels that belong to the third channel set in the 5 GHz Wi-Fi channel list is greater than a third preset threshold associated with the third channel set.

The selection unit 704 is further configured to: if the highest evaluation score in the channels that belong to the third channel set in the 5 GHz Wi-Fi channel list is greater than the third preset threshold associated with the third channel set, select, as the current operating channel, a channel whose evaluation score is the highest in the channels that belong to the third channel set in the 5 GHz Wi-Fi channel list.

In another optional solution, the calculation unit 702 is further configured to: if the highest evaluation score in the channels that belong to the third channel set in the 5 GHz Wi-Fi channel list is less than or equal to the third preset threshold associated with the third channel set, when a channel that belongs to a fourth channel set exists in the 5 GHz Wi-Fi channel list, calculate an evaluation score of each channel that belongs to the fourth channel set in the 5 GHz Wi-Fi channel list, where each channel in the fourth channel set is an indoor DFS channel.

The determining unit 703 is further configured to determine whether a highest evaluation score in the channels that belong to the fourth channel set in the 5 GHz Wi-Fi channel list is greater than a fourth preset threshold associated with the fourth channel set.

The selection unit 704 is further configured to: if the highest evaluation score in the channels that belong to the fourth channel set in the 5 GHz Wi-Fi channel list is greater than the fourth preset threshold associated with the fourth channel set, select, as the current operating channel, a channel whose evaluation score is the highest in the channels that belong to the fourth channel set in the 5 GHz Wi-Fi channel list.

In another optional solution, the selection unit 704 is further configured to: if the highest evaluation score in the channels that belong to the fourth channel set in the 5 GHz Wi-Fi channel list is less than or equal to the fourth preset threshold associated with the fourth channel set, select a channel whose evaluation score is the highest in the 5 GHz Wi-Fi channel list as the current operating channel.

In another optional solution, the first channel set is a W58 channel set, the second channel set is a W56 channel set, the third channel set is a W52 channel set, and the fourth channel set is a W53 channel set.

In another optional solution, the calculating an evaluation score of each channel that belongs to the first channel set in the 5 GHz Wi-Fi channel list includes: scanning each channel that belongs to the first channel set in the 5 GHz Wi-Fi channel list, to obtain an evaluation parameter of each channel; and calculating the evaluation score of each channel based on the evaluation parameter of each channel.

The device 70 described in FIG. 7 can preferentially select an optimal quality channel from outdoor non-DFS channels as the current operating channel, to avoid cases in which another device is affected when the device 70 selects an indoor channel but operates outside, and the device 70 cannot access a network in a radar signal detection process when the device 70 selects a DFS channel.

In conclusion, in this application, the device can preferentially select an optimal quality channel from outdoor non-DFS channels as the current operating channel, to avoid cases in which regulatory domain requirements of some countries are violated when the device selects an indoor channel but operates outside, a user terminal that does not support the indoor channel cannot access an AP, and a user terminal cannot access the AP in a radar signal detection process when the device selects a DFS channel.

All or some of the foregoing embodiments may be implemented by using software, hardware, firmware, or any combination thereof, insofar said implementations fall within the scope of the invention as defined by the appended claims. When software is used to implement the embodiments, the embodiments may be implemented completely or partially in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any usable medium accessible to a computer, or may be a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

## Claims

1. A channel selection method, comprising:

obtaining (S401) a 5 GHz Wi-Fi channel list corresponding to a current area, wherein an individual channel in the obtained channel list is in one of a first channel set, a second channel set, a third channel set and a fourth channel set, wherein the a first channel set is a W58 channel set, the second channel set is a W56 channel set, the third channel set is a W52 channel set, and the fourth channel set is a W53 channel set;
when a channel that belongs to a first channel set exists in the 5 GHz Wi-Fi channel list, calculating an evaluation score of each channel that belongs to the first channel set in the 5 GHz Wi-Fi channel list;
determining (S402) whether a highest evaluation score in the channels that belong to the first channel set in the 5 GHz Wi-Fi channel list is greater than a first preset threshold associated with the first channel set; and
if the highest evaluation score in the channels that belong to the first channel set in the 5 GHz Wi-Fi channel list is greater than the first preset threshold associated with the first channel set, selecting, as a current operating channel, a channel whose evaluation score is the highest in the channels that belong to the first channel set in the 5 GHz Wi-Fi channel list;
if the highest evaluation score in the channels that belong to the first channel set in the 5 GHz Wi-Fi channel list is less than or equal to the first preset threshold associated with the first channel set, when a channel that belongs to a second channel set exists in the 5 GHz Wi-Fi channel list, determining (S403) whether a highest evaluation score in the channels that belong to the second channel set in the 5 GHz Wi-Fi channel list is greater than a second preset threshold associated with the second channel set; and
wherein, the calculating an evaluation score of each channel that belongs to an individual channel set in the 5 GHz Wi-Fi channel list includes:

scanning each channel that belongs to the individual channel set in the 5 GHz Wi-Fi channel list, to obtain an evaluation parameter of each channel; separately calculating scores of evaluation parameters of each

13

channel based on the evaluation parameters of each channel; and calculating an evaluation score of each channel based on a score of each evaluation parameter of each channel and a weight factor that is corresponding to each evaluation parameter;

wherein, the evaluation score of each channel is calculated by using a formula

$$S(i) = \frac{a1_i * f1 + a2_i * f2 + \cdots + aN_i * fN}{f1 + f2 + f3 + \cdots + fN}$$

, where S(i) is an evaluation score of a channel numbered i in the channels that belong to the individual channel set in the 5 GHz Wi-Fi channel list, evaluation scores of the channels that belong to the individual channel set in the 5 GHz Wi-Fi channel list are obtained by separately using channel numbers corresponding to the channels that belong to the individual channel set in the 5 GHz Wi-Fi channel list, as i, where $a1_i$ is a score of a first evaluation parameter on the channel i, a2; is a score of a second evaluation parameter on the channel i, aN; is a score of an $N^{th}$ evaluation parameter on the channel i, f1 is a weight factor corresponding to the first evaluation parameter, f2 is a weight factor corresponding to the second evaluation parameter, and fN is a weight factor corresponding to the $N^{th}$ evaluation parameter.

2. The method according to claim 1, the determining whether a highest evaluation score in the channels that belong to the second channel set in the 5 GHz Wi-Fi channel list is greater than a second preset threshold associated with the second channel set comprises:

   calculating an evaluation score of each channel that belongs to the second channel set in the 5 GHz Wi-Fi channel list, wherein each channel in the second channel set is an outdoor DFS channel; and
   the method further comprises:
   if the highest evaluation score in the channels that belong to the second channel set in the 5 GHz Wi-Fi channel list is greater than the second preset threshold associated with the second channel set, selecting, as the current operating channel, a channel whose evaluation score is the highest in the channels that belong to the second channel set in the 5 GHz Wi-Fi channel list.

3. The method according to claim 2, further comprising:

   if the highest evaluation score in the channels that belong to the second channel set in the 5 GHz Wi-Fi channel list is less than or equal to the second preset threshold associated with the second channel set, when a channel that belongs to a third channel set exists in the 5 GHz Wi-Fi channel list, calculating an evaluation score of each channel that belongs to the third channel set in the 5 GHz Wi-Fi channel list, wherein each channel in the third channel set is an indoor non-DFS channel;
   determining whether a highest evaluation score in the channels that belong to the third channel set in the 5 GHz Wi-Fi channel list is greater than a third preset threshold associated with the third channel set; and
   if the highest evaluation score in the channels that belong to the third channel set in the 5 GHz Wi-Fi channel list is greater than the third preset threshold associated with the third channel set, selecting, as the current operating channel, a channel whose evaluation score is the highest in the channels that belong to the third channel set in the 5 GHz Wi-Fi channel list.

4. The method according to claim 3, further comprising:

   if the highest evaluation score in the channels that belong to the third channel set in the 5 GHz Wi-Fi channel list is less than or equal to the third preset threshold associated with the third channel set, when a channel that belongs to a fourth channel set exists in the 5 GHz Wi-Fi channel list, calculating an evaluation score of each channel that belongs to the fourth channel set in the 5 GHz Wi-Fi channel list;
   determining whether a highest evaluation score in the channels that belong to the fourth channel set in the 5 GHz Wi-Fi channel list is greater than a fourth preset threshold associated with the fourth channel set; and
   if the highest evaluation score in the channels that belong to the fourth channel set in the 5 GHz Wi-Fi channel list is greater than the fourth preset threshold associated with the fourth channel set, selecting, as the current operating channel, a channel whose evaluation score is the highest in the channels that belong to the fourth channel set in the 5 GHz Wi-Fi channel list.

5. The method according to claim 4, further comprising:
   if the highest evaluation score in the channels that belong to the fourth channel set in the 5 GHz Wi-Fi channel list is less than or equal to the fourth preset threshold associated with the fourth channel set, selecting a channel whose evaluation score is the highest in the 5 GHz Wi-Fi channel list as the current operating channel.

6. A device, wherein the device comprises a processor (601) and a memory (602);

the memory is configured to store an instruction and data; and
the processor is configured to read the instruction and the data that are stored in the memory, to perform the following operations:

obtaining a 5 GHz Wi-Fi channel list corresponding to a current area, wherein an individual channel in the obtained channel list is in one of a first channel set, a second channel set, a third channel set and a fourth channel set, wherein the a first channel set is a W58 channel set, the second channel set is a W56 channel set, the third channel set is a W52 channel set, and the fourth channel set is a W53 channel set;
when a channel that belongs to a first channel set exists in the 5 GHz Wi-Fi channel list, calculating an evaluation score of each channel that belongs to the first channel set in the 5 GHz Wi-Fi channel list;
determining whether a highest evaluation score in the channels that belong to the first channel set in the 5 GHz Wi-Fi channel list is greater than a first preset threshold associated with the first channel set; and
if the highest evaluation score in the channels that belong to the first channel set in the 5 GHz Wi-Fi channel list is greater than the first preset threshold associated with the first channel set, selecting, as a current operating channel, a channel whose evaluation score is the highest in the channels that belong to the first channel set in the 5 GHz Wi-Fi channel list;
if the highest evaluation score in the channels that belong to the first channel set in the 5 GHz Wi-Fi channel list is less than or equal to the first preset threshold associated with the first channel set, when a channel that belongs to a second channel set exists in the 5 GHz Wi-Fi channel list, determining whether a highest evaluation score in the channels that belong to the second channel set in the 5 GHz Wi-Fi channel list is greater than a second preset threshold associated with the second channel set; and
wherein, the calculating an evaluation score of each channel that belongs to the first channel set in the 5 GHz Wi-Fi channel list includes:

scanning each channel that belongs to the first channel set in the 5 GHz Wi-Fi channel list, to obtain an evaluation parameter of each channel; separately calculating scores of evaluation parameters of each channel based on the evaluation parameters of each channel; and calculating an evaluation score of each channel based on a score of each evaluation parameter of each channel and a weight factor that is corresponding to each evaluation parameter;
wherein, the evaluation score of each channel is calculated by using a formula $S(i) = \dfrac{a1_i * f1 + a2_i * f2 + \cdots + aN_i * fN}{f1 + f2 + f3 + \cdots + fN}$, where $S(i)$ is an evaluation score of a channel numbered i in the channels that belong to the first channel set in the 5 GHz Wi-Fi channel list corresponding to the current area. Evaluation scores of the channels that belong to the first channel set in the 5 GHz Wi-Fi channel list corresponding to the current area are obtained by separately using channel numbers corresponding to the channels that belong to the first channel set in the 5 GHz Wi-Fi channel list, as i, where $a1_i$ is a score of a first evaluation parameter on the channel i, $a2_i$ is a score of a second evaluation parameter on the channel i, $aN_i$ is a score of an $N^{th}$ evaluation parameter on the channel i, f1 is a weight factor corresponding to the first evaluation parameter, f2 is a weight factor corresponding to the second evaluation parameter, and fN is a weight factor corresponding to the $N^{th}$ evaluation parameter.

7. The device according to claim 6, wherein the determining whether a highest evaluation score in the channels that belong to the second channel set in the 5 GHz Wi-Fi channel list is greater than a second preset threshold associated with the second channel set comprises:

calculating an evaluation score of each channel that belongs to the second channel set in the 5 GHz Wi-Fi channel list, wherein each channel in the second channel set is an outdoor DFS channel; and
the processor is further configured to:
if the highest evaluation score in the channels that belong to the second channel set in the 5 GHz Wi-Fi channel list is greater than the second preset threshold associated with the second channel set, select, as the current operating channel, a channel whose evaluation score is the highest in the channels that belong to the second channel set in the 5 GHz Wi-Fi channel list.

8. The device according to claim 7, wherein the processor is further configured to:

if the highest evaluation score in the channels that belong to the second channel set in the 5 GHz Wi-Fi channel list is less than or equal to the second preset threshold associated with the second channel set, when a channel that belongs to a third channel set exists in the 5 GHz Wi-Fi channel list, calculate an evaluation score of each channel that belongs to the third channel set in the 5 GHz Wi-Fi channel list, wherein each channel in the third channel set is an indoor non-DFS channel;

determine whether a highest evaluation score in the channels that belong to the third channel set in the 5 GHz Wi-Fi channel list is greater than a third preset threshold associated with the third channel set; and

if the highest evaluation score in the channels that belong to the third channel set in the 5 GHz Wi-Fi channel list is greater than the third preset threshold associated with the third channel set, select, as the current operating channel, a channel whose evaluation score is the highest in the channels that belong to the third channel set in the 5 GHz Wi-Fi channel list.

9. The device according to claim 8, wherein the processor is further configured to:

if the highest evaluation score in the channels that belong to the third channel set in the 5 GHz Wi-Fi channel list is less than or equal to the third preset threshold associated with the third channel set, when a channel that belongs to a fourth channel set exists in the 5 GHz Wi-Fi channel list, calculate an evaluation score of each channel that belongs to the fourth channel set in the 5 GHz Wi-Fi channel list, wherein each channel in the fourth channel set is an indoor DFS channel;

determine whether a highest evaluation score in the channels that belong to the fourth channel set in the 5 GHz Wi-Fi channel list is greater than a fourth preset threshold associated with the fourth channel set; and

if the highest evaluation score in the channels that belong to the fourth channel set in the 5 GHz Wi-Fi channel list is greater than the fourth preset threshold associated with the fourth channel set, select, as the current operating channel, a channel whose evaluation score is the highest in the channels that belong to the fourth channel set in the 5 GHz Wi-Fi channel list.

10. The device according to claim 9, wherein the processor is further configured to:
if the highest evaluation score in the channels that belong to the fourth channel set in the 5 GHz Wi-Fi channel list is less than or equal to the fourth preset threshold associated with the fourth channel set, select a channel whose evaluation score is the highest in the 5 GHz Wi-Fi channel list as the current operating channel.

11. A computer readable storage medium, comprising an instruction, wherein when the instruction runs on a computer, the computer performs the method according to claims 1 to 5.


**Patentansprüche**

1. Kanalauswahlverfahren, umfassend:

Erlangen (S401) einer 5-GHz-WiFi-Kanalliste korrespondierend mit einem gegenwärtigen Gebiet, wobei ein individueller Kanal in der erlangten Kanalliste in einer einer ersten Kanalmenge, einer zweiten Kanalmenge, einer dritten Kanalmenge und einer vierten Kanalmenge ist, wobei die erste Kanalmenge eine W58-Kanalmenge ist, die zweite Kanalmenge eine W56-Kanalmenge ist, die dritte Kanalmenge eine W52-Kanalmenge ist und die vierte Kanalmenge eine W53-Kanalmenge ist;

wenn ein Kanal, der zu einer ersten Kanalmenge gehört, in der 5-GHZ-WiFi-Kanalliste existiert, Berechnen einer Bewertungskennziffer jedes Kanals, der zu der ersten Kanalmenge in der 5-GHz-WiFi-Kanalliste gehört;

Bestimmen (S402), ob eine höchste Bewertungskennziffer in den Kanälen, die zu der ersten Kanalmenge in der 5-GHz-WiFi-Kanalliste gehören, größer als ein erster voreingestellter Schwellenwert ist, der mit der ersten Kanalmenge assoziiert ist; und

wenn die höchste Bewertungskennziffer in den Kanälen, die zu der ersten Kanalmenge in der 5-GHz-WiFi-Kanalliste gehören, größer als der erste voreingestellte Schwellenwert ist, der mit der ersten Kanalmenge assoziiert ist, Auswählen, als einen gegenwärtigen Betriebskanal, eines Kanals, dessen Bewertungskennziffer die höchste in den Kanälen ist, die zu der ersten Kanalmenge in der 5-GHz-WiFi-Kanalliste gehören;

wenn die höchste Bewertungskennziffer in den Kanälen, die zu der ersten Kanalmenge in der 5-GHz-WiFi-Kanalliste gehören, kleiner als der oder gleich dem ersten voreingestellten Schwellenwert ist, der mit der ersten Kanalmenge assoziiert ist, und wenn ein Kanal, der zu einer zweiten Kanalmenge gehört, in der 5-GHz-WiFi-Kanalliste existiert, Bestimmen (S403), ob eine höchste Bewertungskennziffer in den Kanälen, die zu der zweiten Kanalmenge in the 5-GHz-WiFi-Kanalliste gehören, größer als ein zweiter voreingestellter Schwellenwert ist, der mit der zweiten Kanalmenge assoziiert ist; und

wobei das Berechnen einer Bewertungskennziffer jedes Kanals, der zu einer individuellen Kanalmenge in der 5-GHz-WiFi-Kanalliste gehört, Folgendes umfasst:

Abtasten jedes Kanals, der zu der individuellen Kanalmenge in der 5-GHz-WiFi-Kanalliste gehört, um einen Bewertungsparameter jedes Kanals zu erlangen; separates Berechnen von Kennziffern von Bewertungsparametern jedes Kanals basierend auf den Bewertungsparametern jedes Kanals; und Berechnen einer Bewertungskennziffer jedes Kanals basierend auf einer Kennziffer jedes Bewertungsparameters jedes Kanals und einem Gewichtungsfaktor, der mit jedem Bewertungsparameter korrespondiert;

wobei die Bewertungskennziffer jedes Kanals unter Verwendung einer Formel $S(i) = \dfrac{a1_i*f1 + a2_i*f2 + \cdots + aN_i*fN}{f1 + f2 + f3 + \cdots + fN}$ berechnet wird, wobei $S(i)$ eine Bewertungskennziffer eines Kanals mit der Nummer $i$ in den Kanälen ist, die zu der individuellen Kanalmenge in der 5-GHz-WiFi-Kanalliste gehören, Bewertungskennziffern der Kanäle, die zu der individuellen Kanalmenge in der 5-GHz-WiFi-Kanalliste gehören, durch separates Verwenden von Kanalnummern korrespondierend mit den Kanälen, die zu der individuellen Kanalmenge in der 5-GHz-WiFi-Kanalliste gehören, als $i$ erlangt werden, wobei $a1_i$ eine Kennziffer eines ersten Bewertungsparameters auf dem Kanal $i$ ist, $a2_i$ eine Kennziffer eines zweiten Bewertungsparameters auf dem Kanal $i$ ist, $aN_i$ eine Kennziffer eines N-ten Bewertungsparameters auf dem Kanal $i$ ist, $f1$ ein Gewichtungsfaktor korrespondierend mit dem ersten Bewertungsparameter ist, $f2$ ein Gewichtungsfaktor korrespondierend mit dem zweiten Bewertungsparameter ist und $fN$ ein Gewichtungsfaktor korrespondierend mit dem N-ten Bewertungsparameter ist.

2. Verfahren nach Anspruch 1, wobei das Bestimmen, ob eine höchste Bewertungskennziffer in den Kanälen, die zu der zweiten Kanalmenge in der 5-GHz-WiFi-Kanalliste gehören, größer als ein zweiter voreingestellter Schwellenwert ist, der mit der zweiten Kanalmenge assoziiert ist, Folgendes umfasst:

Berechnen einer Bewertungskennziffer jedes Kanals, der zu der zweiten Kanalmenge in der 5-GHz-WiFi-Kanalliste gehört, wobei jeder Kanal in der zweiten Kanalmenge ein Außenbereich-DFS-Kanal ist; und
wobei das Verfahren ferner Folgendes umfasst:
wenn die höchste Bewertungskennziffer in den Kanälen, die zu der zweiten Kanalmenge in der 5-GHz-WiFi-Kanalliste gehören, größer als der zweite voreingestellte Schwellenwert ist, der mit der zweiten Kanalmenge assoziiert ist, Auswählen, als den gegenwärtigen Betriebskanal, eines Kanals, dessen Bewertungskennziffer in den Kanälen die höchste ist, die zu der zweiten Kanalmenge in der 5-GHz-WiFi-Kanalliste gehören.

3. Verfahren nach Anspruch 2, ferner umfassend:

wenn die höchste Bewertungskennziffer in den Kanälen, die zu der zweiten Kanalmenge in der 5-GHz-WiFi-Kanalliste gehören, kleiner als der oder gleich dem zweiten voreingestellten Schwellenwert ist, der mit der zweiten Kanalmenge assoziiert ist, und wenn ein Kanal, der zu einer dritten Kanalmenge in der 5-GHz-WiFi-Kanalliste gehört, existiert, Berechnen einer Bewertungskennziffer jedes Kanals, der zu der dritten Kanalmenge in der 5-GHz-WiFi-Kanalliste gehört, wobei jeder Kanal in der dritten Kanalmenge ein Innenbereich-Nicht-DFS-Kanal ist;
Bestimmen, ob eine höchste Bewertungskennziffer in den Kanälen, die zu der dritten Kanalmenge in der 5-GHz-WiFi-Kanalliste gehören, größer als ein dritter voreingestellter Schwellenwert ist, der mit der dritten Kanalmenge assoziiert ist; und wenn die höchste Bewertungskennziffer in den Kanälen, die zu der dritten Kanalmenge in der 5-GHz-WiFi-Kanalliste gehören, größer als der dritte voreingestellte Schwellenwert ist, der mit der dritten Kanalmenge assoziiert ist, Auswählen, als den gegenwärtigen Betriebskanal, eines Kanals, dessen Bewertungskennziffer die höchste in den Kanälen ist, die zu der dritten Kanalmenge in der 5-GHz-WiFi-Kanalliste gehören.

4. Verfahren nach Anspruch 3, ferner umfassend:

wenn die höchste Bewertungskennziffer in den Kanälen, die zu der dritten Kanalmenge in der 5-GHz-WiFi-Kanalliste gehören, kleiner als der oder gleich dem dritten voreingestellten Schwellenwert ist, der mit der dritten Kanalmenge assoziiert ist, und

wenn ein Kanal, der zu einer vierten Kanalmenge in der 5-GHz-WiFi-Kanalliste gehört, existiert, Berechnen einer Bewertungskennziffer jedes Kanals, der zu der vierten Kanalmenge in der 5-GHz-WiFi-Kanalliste gehört; Bestimmen, ob eine höchste Bewertungskennziffer in den Kanälen, die zu der vierten Kanalmenge in der 5-GHz-WiFi-Kanalliste gehören, größer als ein vierter voreingestellter Schwellenwert ist, der mit der vierten Kanalmenge assoziiert ist; und wenn die höchste Bewertungskennziffer in den Kanälen, die zu der vierten Kanalmenge in der 5-GHz-WiFi-Kanalliste gehören, größer als der vierte voreingestellte Schwellenwert ist, der mit der vierten Kanalmenge assoziiert ist, Auswählen, als den gegenwärtigen Betriebskanal, eines Kanals, dessen Bewertungskennziffer die höchste in den Kanälen ist, die zu der vierten Kanalmenge in der 5-GHz-WiFi-Kanalliste gehören.

5. Verfahren nach Anspruch 4, ferner umfassend:
wenn die höchste Bewertungskennziffer in den Kanälen, die zu der vierten Kanalmenge in der 5-GHz-WiFi-Kanalliste gehören, kleiner als der oder gleich dem vierten voreingestellten Schwellenwert ist, der mit der vierten Kanalmenge assoziiert ist, Auswählen eines Kanals, dessen Bewertungskennziffer die höchste in der 5-GHz-WiFi-Kanalliste ist, als den gegenwärtigen Betriebskanal.

6. Vorrichtung, wobei die Vorrichtung einen Prozessor (601) und einen Speicher (602) umfasst; und wobei der Speicher konfiguriert ist zum Speichern einer Anweisung und von Daten; und der Prozessor konfiguriert ist zum Lesen der Anweisung und der Daten, die in dem Speicher gespeichert sind, um die folgenden Betriebsvorgänge durchzuführen:

Erlangen einer 5-GHz-WiFi-Kanalliste korrespondierend mit einem gegenwärtigen Gebiet, wobei ein individueller Kanal in der erlangten Kanalliste in einer einer ersten Kanalmenge, einer zweiten Kanalmenge, einer dritten Kanalmenge und einer vierten Kanalmenge ist, wobei die erste Kanalmenge eine W58-Kanalmenge ist, die zweite Kanalmenge eine W56-Kanalmenge ist, die dritte Kanalmenge eine W52-Kanalmenge ist und die vierte Kanalmenge eine W53-Kanalmenge ist;
wenn ein Kanal, der zu einer ersten Kanalmenge gehört, in der 5-GHZ-WiFi-Kanalliste existiert, Berechnen einer Bewertungskennziffer jedes Kanals, der zu der ersten Kanalmenge in der 5-GHz-WiFi-Kanalliste gehört; Bestimmen, ob eine höchste Bewertungskennziffer in den Kanälen, die zu der ersten Kanalmenge in der 5-GHz-WiFi-Kanalliste gehören, größer als ein erster voreingestellter Schwellenwert ist, der mit der ersten Kanalmenge assoziiert ist; und
wenn die höchste Bewertungskennziffer in den Kanälen, die zu der ersten Kanalmenge in der 5-GHz-WiFi-Kanalliste gehören, größer als der erste voreingestellte Schwellenwert ist, der mit der ersten Kanalmenge assoziiert ist, Auswählen, als einen gegenwärtigen Betriebskanal, eines Kanals, dessen Bewertungskennziffer die höchste in den Kanälen ist, die zu der ersten Kanalmenge in der 5-GHz-WiFi-Kanalliste gehören;
wenn die höchste Bewertungskennziffer in den Kanälen, die zu der ersten Kanalmenge in der 5-GHz-WiFi-Kanalliste gehören, kleiner als der oder gleich dem ersten voreingestellten Schwellenwert ist, der mit der ersten Kanalmenge assoziiert ist, und wenn ein Kanal, der zu einer zweiten Kanalmenge gehört, in der 5-GHz-WiFi-Kanalliste existiert, Bestimmen, ob eine höchste Bewertungskennziffer in den Kanälen, die zu der zweiten Kanalmenge in der 5-GHz-WiFi-Kanalliste gehören, größer als ein zweiter voreingestellter Schwellenwert ist, der mit der zweiten Kanalmenge assoziiert ist; und
wobei das Berechnen einer Bewertungskennziffer jedes Kanals, der zu der ersten Kanalmenge in der 5-GHz-WiFi-Kanalliste gehört, Folgendes umfasst:

Abtasten jedes Kanals, der zu der ersten Kanalmenge in der 5-GHz-WiFi-Kanalliste gehört, um einen Bewertungsparameter jedes Kanals zu erlangen; separates Berechnen von Kennziffern von Bewertungsparametern jedes Kanals basierend auf den Bewertungsparametern jedes Kanals; und Berechnen einer Bewertungskennziffer jedes Kanals basierend auf einer Kennziffer jedes Bewertungsparameters jedes Kanals und einem Gewichtungsfaktor, der mit jedem Bewertungsparameter korrespondiert;
wobei die Bewertungskennziffer jedes Kanals unter Verwendung einer Formel $S(i) = \frac{a1_i * f1 + a2_i * f2 + \cdots + aN_i * fN}{f1 + f2 + f3 + \cdots + fN}$ berechnet wird, wobei $S(i)$ eine Bewertungskennziffer eines Kanals mit der Nummer i in den Kanälen ist, die zu der ersten Kanalmenge in der 5-GHz-WiFi-Kanalliste korrespondierend mit dem gegenwärtigen Gebiet gehören, wobei Bewertungskennziffern der Kanäle, die zu der ersten Kanalmenge in der 5-GHz-WiFi-Kanalliste korrespondierend mit dem gegenwärtigen Gebiet gehören, durch separates Verwenden von Kanalnummern korrespondierend mit den Kanälen, die zu der ersten Kanalmenge in der 5-GHz-WiFi-Kanalliste gehören, als i erlangt werden, wobei $a1_i$ eine Kennziffer eines ersten Bewertungsparameters auf dem Kanal i ist, $a2_i$ eine Kennziffer einer zweiten Bewertungsparameters auf dem Kanal i ist, aN$_i$ eine Kennziffer eines N-ten Bewertungsparameters auf dem Kanal i ist, f1 ein Gewichtungsfaktor korrespondierend mit dem ersten Bewertungsparameter ist, f2 ein Gewichtungsfaktor korrespondierend mit dem zweiten Bewertungsparameter ist und fN ein Gewichtungsfaktor korrespondierend mit dem N-ten Bewertungsparameter ist.

7.  Vorrichtung nach Anspruch 6, wobei das Bestimmen, ob eine höchste Bewertungskennziffer in den Kanälen, die zu der zweiten Kanalmenge in der 5-GHz-WiFi-Kanalliste gehören, größer als ein zweiter voreingestellter Schwellenwert ist, der mit der zweiten Kanalmenge assoziiert ist, Folgendes umfasst:

    Berechnen einer Bewertungskennziffer jedes Kanals, der zu der zweiten Kanalmenge in der 5-GHz-WiFi-Kanalliste gehört, wobei jeder Kanal in der zweiten Kanalmenge ein Außenbereich-DFS-Kanal ist; und
    der Prozessor ferner konfiguriert ist zum:
    wenn die höchste Bewertungskennziffer in den Kanälen, die zu der zweiten Kanalmenge in der 5-GHz-WiFi-Kanalliste gehören, größer als der zweite voreingestellte Schwellenwert ist, der mit der zweiten Kanalmenge assoziiert ist, Auswählen, als den gegenwärtigen Betriebskanal, eines Kanals, dessen Bewertungskennziffer die höchste in den Kanälen ist, die zu der zweiten Kanalmenge in der 5-GHz-WiFi-Kanalliste gehören.

8.  Vorrichtung nach Anspruch 7, wobei der Prozessor ferner konfiguriert ist zum:

    wenn die höchste Bewertungskennziffer in den Kanälen, die zu der zweiten Kanalmenge in der 5-GHz-WiFi-Kanalliste gehören, kleiner als der oder gleich dem zweiten voreingestellten Schwellenwert ist, der mit der zweiten Kanalmenge assoziiert ist, und wenn ein Kanal, der zu einer dritten Kanalmenge in der 5-GHz-WiFi-Kanalliste gehört, existiert, Berechnen einer Bewertungskennziffer jedes Kanals, der zu der dritten Kanalmenge in der 5-GHz-WiFi-Kanalliste gehört, wobei jeder Kanal in der dritten Kanalmenge ein Innenbereich-Nicht-DFS-Kanal ist;
    Bestimmen, ob eine höchste Bewertungskennziffer in den Kanälen, die zu der dritten Kanalmenge in der 5-GHz-WiFi-Kanalliste gehören, größer als ein dritter voreingestellter Schwellenwert ist, der mit der dritten Kanalmenge assoziiert ist; und
    wenn die höchste Bewertungskennziffer in den Kanälen, die zu der dritten Kanalmenge in der 5-GHz-WiFi-Kanalliste gehören, größer als der dritte voreingestellte Schwellenwert ist, der mit der dritten Kanalmenge assoziiert ist, Auswählen, als den gegenwärtigen Betriebskanal, eines Kanals, dessen Bewertungskennziffer die höchste in den Kanälen ist, die zu der dritten Kanalmenge in der 5-GHz-WiFi-Kanalliste gehören.

9.  Vorrichtung nach Anspruch 8, wobei der Prozessor ferner konfiguriert ist zum:

    wenn die höchste Bewertungskennziffer in den Kanälen, die zu der dritten Kanalmenge in der 5-GHz-WiFi-Kanalliste gehören, kleiner als der oder gleich dem dritten voreingestellten Schwellenwert ist, der mit der dritten Kanalmenge assoziiert ist, und
    wenn ein Kanal, der zu einer vierten Kanalmenge in der 5-GHz-WiFi-Kanalliste gehört, existiert, Berechnen einer Bewertungskennziffer jedes Kanals, der zu der vierten Kanalmenge in der 5-GHz-WiFi-Kanalliste gehört, wobei jeder Kanal in der vierten Kanalmenge ein Innenbereich-DFS-Kanal ist;
    Bestimmen, ob eine höchste Bewertungskennziffer in den Kanälen, die zu der vierten Kanalmenge in der 5-GHz-WiFi-Kanalliste gehören, größer als ein vierter voreingestellter Schwellenwert ist, der mit der vierten Kanalmenge assoziiert ist; und
    wenn die höchste Bewertungskennziffer in den Kanälen, die zu der vierten Kanalmenge in der 5-GHz-WiFi-Kanalliste gehören, größer als der vierte voreingestellte Schwellenwert ist, der mit der vierten Kanalmenge assoziiert ist, Auswählen, als den gegenwärtigen Betriebskanal, eines Kanals, dessen Bewertungskennziffer die höchste in den Kanälen ist, die zu der vierten Kanalmenge in der 5-GHz-WiFi-Kanalliste gehören.

10. Vorrichtung nach Anspruch 9, wobei der Prozessor ferner konfiguriert ist zum: wenn die höchste Bewertungskennziffer in den Kanälen, die zu der vierten Kanalmenge in der 5-GHz-WiFi-Kanalliste gehören, kleiner als der oder gleich dem vierten voreingestellten Schwellenwert ist, der mit der vierten Kanalmenge assoziiert ist, Auswählen eines Kanals, dessen Bewertungskennziffer die höchste in der 5-GHz-WiFi-Kanalliste ist, als den gegenwärtigen Betriebskanal.

11. Computerlesbares Speichermedium, umfassend eine Anweisung, wobei, wenn die Anweisung auf einem Computer ausgeführt wird, der Computer das Verfahren nach den Ansprüchen 1 bis 5 durchführt.

**Revendications**

1.  Procédé de sélection de canal, comprenant :

    l'obtention (S401) d'une liste de canaux Wi-Fi 5 GHz correspondant à une zone courante, un canal individuel dans la liste de canaux obtenue figurant dans l'un d'un premier ensemble de canaux, d'un deuxième ensemble de canaux, d'un troisième ensemble de canaux et d'un quatrième ensemble de canaux, le premier ensemble de canaux étant un ensemble de canaux W58, le deuxième ensemble de canaux étant un ensemble de canaux W56, le troisième ensemble de canaux étant un ensemble de canaux W52 et le quatrième ensemble de canaux étant un ensemble de canaux W53 ;
    lorsqu'un canal qui appartient à un premier ensemble de canaux est présent dans la liste de canaux Wi-Fi 5 GHz, le calcul d'un score d'évaluation de chaque canal qui appartient au premier ensemble de canaux dans la liste de canaux Wi-Fi 5 GHz ;
    la détermination (S402) si un plus haut score d'évaluation dans les canaux qui appartiennent au premier ensemble de canaux dans la liste de canaux Wi-Fi 5 GHz est supérieur ou non à un premier seuil prédéfini associé au premier ensemble de canaux ;
    et
    si le plus haut score d'évaluation dans les canaux qui appartiennent au premier ensemble de canaux dans la liste de canaux Wi-Fi 5 GHz est supérieur au premier seuil prédéfini associé au premier ensemble de canaux, la sélection, comme canal d'exploitation courant, d'un canal dont le score d'évaluation est le plus haut dans les canaux qui appartiennent au premier ensemble de canaux dans la liste de canaux Wi-Fi 5 GHz ;
    si le plus haut score d'évaluation dans les canaux qui appartiennent au premier ensemble de canaux dans la liste de canaux Wi-Fi 5 GHz est inférieur ou égal au premier seuil prédéfini associé au premier ensemble de canaux, lorsqu'un canal qui appartient à un deuxième ensemble de canaux est présent dans la liste de canaux Wi-Fi 5 GHz, la détermination (S403) si un plus haut score d'évaluation dans les canaux qui appartiennent au deuxième ensemble de canaux dans la liste de canaux Wi-Fi 5 GHz est ou non supérieur à un deuxième seuil prédéfini associé au deuxième ensemble de canaux ; et
    le calcul d'un score d'évaluation de chaque canal qui appartient à un ensemble de canaux individuel dans la liste de canaux Wi-Fi 5 GHz comportant :

    le balayage de chaque canal qui appartient à l'ensemble de canaux individuel dans la liste de canaux Wi-Fi 5 GHz dans le but d'obtenir un paramètre d'évaluation de chaque canal ; le calcul séparé de scores de paramètres d'évaluation de chaque canal sur la base des paramètres d'évaluation de chaque canal ; et le calcul d'un score d'évaluation de chaque canal sur la base d'un score de chaque paramètre d'évaluation de chaque canal et d'un facteur de pondération qui correspond à chaque paramètre d'évaluation ;
    le score d'évaluation de chaque canal étant calculé au moyen d'une formule

    $$S(i) = \frac{a1_i * f1 + a2_i * f2 + \cdots + aN_i * fN}{f1 + f2 + f3 + \cdots + fN}$$

    , S(i) représentant un score d'évaluation d'un canal numéroté i dans les canaux qui appartiennent à l'ensemble de canaux individuel dans la liste de canaux Wi-Fi 5 GHz, des scores d'évaluation des canaux qui appartiennent à l'ensemble de canaux individuel dans la liste de canaux Wi-Fi 5 GHz étant obtenus par utilisation séparée de numéros de canal correspondant aux canaux qui appartiennent à l'ensemble de canaux individuel dans la liste de canaux Wi-Fi 5 GHz, indiqués par i, $a1_i$ représentant un score d'un premier paramètre d'évaluation sur le canal i, $a2_i$ représentant un score d'un deuxième paramètre d'évaluation sur le canal i, $aN_i$ représentant un score d'un N-ième paramètre d'évaluation sur le canal i, f1 représentant un facteur de pondération correspondant au premier paramètre d'évaluation, f2 représentant un facteur de pondération correspondant au deuxième paramètre d'évaluation et fN représentant un facteur de pondération correspondant au N-ième paramètre d'évaluation.

2.  Procédé selon la revendication 1, dans lequel la détermination si un plus haut score d'évaluation dans les canaux qui appartiennent au deuxième ensemble de canaux dans la liste de canaux Wi-Fi 5 GHz est ou non supérieur à un deuxième seuil prédéfini associé au deuxième ensemble de canaux comprend :

    le calcul d'un score d'évaluation de chaque canal qui appartient au deuxième ensemble de canaux dans la liste de canaux Wi-Fi 5 GHz, chaque canal dans le deuxième ensemble de canaux étant un canal DFS d'extérieur ; et
    le procédé comprend en outre :
    si le plus haut score d'évaluation dans les canaux qui appartiennent au deuxième ensemble de canaux dans la liste de canaux Wi-Fi 5 GHz est supérieur au deuxième seuil prédéfini associé au deuxième ensemble de canaux, la sélection, comme canal d'exploitation courant, d'un canal dont le score d'évaluation est le plus haut dans les canaux qui appartiennent au deuxième ensemble de canaux dans la liste de canaux Wi-Fi 5 GHz.

3. Procédé selon la revendication 2, comprenant en outre :

si le plus haut score d'évaluation dans les canaux qui appartiennent au deuxième ensemble de canaux dans la liste de canaux Wi-Fi 5 GHz est inférieur ou égal au deuxième seuil prédéfini associé au deuxième ensemble de canaux, lorsqu'un canal qui appartient à un troisième ensemble de canaux est présent dans la liste de canaux Wi-Fi 5 GHz, le calcul d'un score d'évaluation de chaque canal qui appartient au troisième ensemble de canaux dans la liste de canaux Wi-Fi 5 GHz, chaque canal dans le troisième ensemble de canaux étant un canal non DFS d'intérieur ;
la détermination si un plus haut score d'évaluation dans les canaux qui appartiennent au troisième ensemble de canaux dans la liste de canaux Wi-Fi 5 GHz est ou non supérieur à un troisième seuil prédéfini associé au troisième ensemble de canaux ; et
si le plus haut score d'évaluation dans les canaux qui appartiennent au troisième ensemble de canaux dans la liste de canaux Wi-Fi 5 GHz est supérieur au troisième seuil prédéfini associé au troisième ensemble de canaux, la sélection, comme canal d'exploitation courant, d'un canal dont le score d'évaluation est le plus haut dans les canaux qui appartiennent au troisième ensemble de canaux dans la liste de canaux Wi-Fi 5 GHz.

4. Procédé selon la revendication 3, comprenant en outre :

si le plus haut score d'évaluation dans les canaux qui appartiennent au troisième ensemble de canaux dans la liste de canaux Wi-Fi 5 GHz est inférieur ou égal au troisième seuil prédéfini associé au troisième ensemble de canaux, lorsqu'un canal qui appartient à un quatrième ensemble de canaux est présent dans la liste de canaux Wi-Fi 5 GHz, le calcul d'un score d'évaluation de chaque canal qui appartient au quatrième ensemble de canaux dans la liste de canaux Wi-Fi 5 GHz ;
la détermination si un plus haut score d'évaluation dans les canaux qui appartiennent au quatrième ensemble de canaux dans la liste de canaux Wi-Fi 5 GHz est ou non supérieur à un quatrième seuil prédéfini associé au quatrième ensemble de canaux ; et
si le plus haut score d'évaluation dans les canaux qui appartiennent au quatrième ensemble de canaux dans la liste de canaux Wi-Fi 5 GHz est supérieur au quatrième seuil prédéfini associé au quatrième ensemble de canaux, la sélection, comme canal d'exploitation courant, d'un canal dont le score d'évaluation est le plus haut dans les canaux qui appartiennent au quatrième ensemble de canaux dans la liste de canaux Wi-Fi 5 GHz.

5. Procédé selon la revendication 4, comprenant en outre :
si le plus haut score d'évaluation dans les canaux qui appartiennent au quatrième ensemble de canaux dans la liste de canaux Wi-Fi 5 GHz est inférieur ou égal au quatrième seuil prédéfini associé au quatrième ensemble de canaux, la sélection d'un canal dont le score d'évaluation est le plus haut dans la liste de canaux Wi-Fi 5 GHz comme canal d'exploitation courant.

6. Dispositif, le dispositif comprenant un processeur (601) et une mémoire (602) ;

la mémoire étant configurée pour stocker une instruction et des données ; et
le processeur étant configuré pour lire l'instruction et les données stockées dans la mémoire pour réaliser les opérations suivantes :

l'obtention d'une liste de canaux Wi-Fi 5 GHz correspondant à une zone courante, un canal individuel dans la liste de canaux obtenue figurant dans l'un d'un premier ensemble de canaux, d'un deuxième ensemble de canaux, d'un troisième ensemble de canaux et d'un quatrième ensemble de canaux, le premier ensemble de canaux étant un ensemble de canaux W58, le deuxième ensemble de canaux étant un ensemble de canaux W56, le troisième ensemble de canaux étant un ensemble de canaux W52 et le quatrième ensemble de canaux étant un ensemble de canaux W53 ;
lorsqu'un canal qui appartient à un premier ensemble de canaux est présent dans la liste de canaux Wi-Fi 5 GHz, le calcul d'un score d'évaluation de chaque canal qui appartient au premier ensemble de canaux dans la liste de canaux Wi-Fi 5 GHz ;
la détermination si un plus haut score d'évaluation dans les canaux qui appartiennent au premier ensemble de canaux dans la liste de canaux Wi-Fi 5 GHz est supérieur ou non à un premier seuil prédéfini associé au premier ensemble de canaux ; et

si le plus haut score d'évaluation dans les canaux qui appartiennent au premier ensemble de canaux dans la liste de canaux Wi-Fi 5 GHz est supérieur au premier seuil prédéfini associé au premier ensemble de canaux, la sélection, comme canal d'exploitation courant, d'un canal dont le score d'évaluation est le plus haut dans les canaux qui appartiennent au premier ensemble de canaux dans la liste de canaux Wi-Fi 5 GHz ;

si le plus haut score d'évaluation dans les canaux qui appartiennent au premier ensemble de canaux dans la liste de canaux Wi-Fi 5 GHz est inférieur ou égal au premier seuil prédéfini associé au premier ensemble de canaux, lorsqu'un canal qui appartient à un deuxième ensemble de canaux est présent dans la liste de canaux Wi-Fi 5 GHz, la détermination si un plus haut score d'évaluation dans les canaux qui appartiennent au deuxième ensemble de canaux dans la liste de canaux Wi-Fi 5 GHz est ou non supérieur à un deuxième seuil prédéfini associé au deuxième ensemble de canaux ; et

le calcul d'un score d'évaluation de chaque canal qui appartient au premier ensemble de canaux dans la liste de canaux Wi-Fi 5 GHz comportant :

le balayage de chaque canal qui appartient au premier ensemble de canaux dans la liste de canaux Wi-Fi 5 GHz dans le but d'obtenir un paramètre d'évaluation de chaque canal ; le calcul séparé de scores de paramètres d'évaluation de chaque canal sur la base des paramètres d'évaluation de chaque canal ; et le calcul d'un score d'évaluation de chaque canal sur la base d'un score de chaque paramètre d'évaluation de chaque canal et d'un facteur de pondération qui correspond à chaque paramètre d'évaluation ; le score d'évaluation de chaque canal étant calculé au moyen d'une formule $S(i) = \dfrac{a1_i * f1 + a2_i * f2 + \cdots + aN_i * fN}{f1 + f2 + f3 + \cdots + fN}$, S(i) représentant un score d'évaluation d'un canal numéroté i dans les canaux qui appartiennent au premier ensemble de canaux dans la liste de canaux Wi-Fi 5 GHz correspondant à la zone courante, des scores d'évaluation des canaux qui appartiennent au premier ensemble de canaux dans la liste de canaux Wi-Fi 5 GHz correspondant à la zone courante étant obtenus par utilisation séparée de numéros de canal correspondant aux canaux qui appartiennent au premier ensemble de canaux dans la liste de canaux Wi-Fi 5 GHz, indiqués par i, $a1_i$ représentant un score d'un premier paramètre d'évaluation sur le canal i, $a2_i$ représentant un score d'un deuxième paramètre d'évaluation sur le canal i, $aN_i$ représentant un score d'un N-ième paramètre d'évaluation sur le canal i, f1 représentant un facteur de pondération correspondant au premier paramètre d'évaluation, f2 représentant un facteur de pondération correspondant au deuxième paramètre d'évaluation et fN représentant un facteur de pondération correspondant au N-ième paramètre d'évaluation.

7. Dispositif selon la revendication 6, dans lequel la détermination si un plus haut score d'évaluation dans les canaux qui appartiennent au deuxième ensemble de canaux dans la liste de canaux Wi-Fi 5 GHz est ou non supérieur à un deuxième seuil prédéfini associé au deuxième ensemble de canaux comprend :

le calcul d'un score d'évaluation de chaque canal qui appartient au deuxième ensemble de canaux dans la liste de canaux Wi-Fi 5 GHz, chaque canal dans le deuxième ensemble de canaux étant un canal DFS d'extérieur ; et

le processeur est configuré en outre pour :

si le plus haut score d'évaluation dans les canaux qui appartiennent au deuxième ensemble de canaux dans la liste de canaux Wi-Fi 5 GHz est supérieur au deuxième seuil prédéfini associé au deuxième ensemble de canaux, sélectionner, comme canal d'exploitation courant, un canal dont le score d'évaluation est le plus haut dans les canaux qui appartiennent au deuxième ensemble de canaux dans la liste de canaux Wi-Fi 5 GHz.

8. Dispositif selon la revendication 7, dans lequel le processeur est configuré en outre pour :

si le plus haut score d'évaluation dans les canaux qui appartiennent au deuxième ensemble de canaux dans la liste de canaux Wi-Fi 5 GHz est inférieur ou égal au deuxième seuil prédéfini associé au deuxième ensemble de canaux, lorsqu'un canal qui appartient à un troisième ensemble de canaux est présent dans la liste de canaux Wi-Fi 5 GHz, calculer un score d'évaluation de chaque canal qui appartient au troisième ensemble de canaux dans la liste de canaux Wi-Fi 5 GHz, chaque canal dans le troisième ensemble de canaux étant un canal non DFS d'intérieur ;

déterminer si un plus haut score d'évaluation dans les canaux qui appartiennent au troisième ensemble de canaux dans la liste de canaux Wi-Fi 5 GHz est ou non supérieur à un troisième seuil prédéfini associé au troisième ensemble de canaux ; et

si le plus haut score d'évaluation dans les canaux qui appartiennent au troisième ensemble de canaux dans la liste de canaux Wi-Fi 5 GHz est supérieur au troisième seuil prédéfini associé au troisième ensemble de canaux, sélectionner, comme canal d'exploitation courant, un canal dont le score d'évaluation est le plus haut dans les canaux qui appartiennent au troisième ensemble de canaux dans la liste de canaux Wi-Fi 5 GHz.

9. Dispositif selon la revendication 8, dans lequel le processeur est configuré en outre pour :

si le plus haut score d'évaluation dans les canaux qui appartiennent au troisième ensemble de canaux dans la liste de canaux Wi-Fi 5 GHz est inférieur ou égal au troisième seuil prédéfini associé au troisième ensemble de canaux, lorsqu'un canal qui appartient à un quatrième ensemble de canaux est présent dans la liste de canaux Wi-Fi 5 GHz, calculer un score d'évaluation de chaque canal qui appartient au quatrième ensemble de canaux dans la liste de canaux Wi-Fi 5 GHz, chaque canal dans le quatrième ensemble de canaux étant un canal DFS d'intérieur ;
déterminer si un plus haut score d'évaluation dans les canaux qui appartiennent au quatrième ensemble de canaux dans la liste de canaux Wi-Fi 5 GHz est ou non supérieur à un quatrième seuil prédéfini associé au quatrième ensemble de canaux ; et si le plus haut score d'évaluation dans les canaux qui appartiennent au quatrième ensemble de canaux dans la liste de canaux Wi-Fi 5 GHz est supérieur au quatrième seuil prédéfini associé au quatrième ensemble de canaux, sélectionner, comme canal d'exploitation courant, un canal dont le score d'évaluation est le plus haut dans les canaux qui appartiennent au quatrième ensemble de canaux dans la liste de canaux Wi-Fi 5 GHz.

10. Dispositif selon la revendication 9, dans lequel le processeur est configuré en outre pour :
si le plus haut score d'évaluation dans les canaux qui appartiennent au quatrième ensemble de canaux dans la liste de canaux Wi-Fi 5 GHz est inférieur ou égal au quatrième seuil prédéfini associé au quatrième ensemble de canaux, sélectionner un canal dont le score d'évaluation est le plus haut dans la liste de canaux Wi-Fi 5 GHz comme canal d'exploitation courant.

11. Support de stockage lisible par ordinateur, comprenant une instruction, lorsque l'instruction s'exécute sur un ordinateur, l'ordinateur réalisant le procédé selon les revendications 1 à 5.

Obtain a 5G channel list corresponding to a current country

Scan each channel in the 5G channel list to obtain an evaluation parameter of each channel

Score the evaluation parameter and perform weighted summation to calculate a total score of each channel

Select a channel with a highest total score as a current operating channel

FIG. 1

Obtain a 5G channel list corresponding to a current country

Does a non-DFS channel exist in the 5G channel list

Yes

No

Randomly select a channel from non-DFS channels as a current operating channel

Randomly select a channel from DFS channels as a current operating channel

FIG. 2

FIG. 3

S401

Obtain a 5G Wi-Fi channel list corresponding to a current area

S402

Determine
whether an operating channel
that meets a requirement exists in channels that belong to a
first channel set in the 5G Wi-Fi
channel list

Yes

No

S403

Determine
whether an operating channel that meets a
requirement exists in channels that belong to a second
channel set in the 5G Wi-Fi
channel list

Yes

No

S404

Determine
whether an operating channel that meets a
requirement exists in channels that belong to a third channel
set in the 5G Wi-Fi
channel list

Yes

No

TO
FIG. 4B

TO
FIG. 4B

FIG. 4A

CONT.
FROM
FIG. 4A

CONT.
FROM
FIG. 4A

S405

Determine
whether an operating channel that meets a
requirement exists in channels that belong to a fourth
channel set in the 5G Wi-Fi
channel list

Yes

No          S406

Select a channel whose evaluation score is the highest in the 5G Wi-Fi
channel list as the operating channel

S407

Use the operating channel for communication

FIG. 4B

S4021

When a channel that belongs to a first channel set exists in a 5G Wi-Fi channel list, calculate an evaluation score of each channel that belongs to the first channel set in the 5G Wi-Fi channel list

S4022

Determine whether a highest evaluation score in the channels that belong to the first channel set in the 5G Wi-Fi channel list is greater than a first preset threshold associated with the first channel set

Yes

No

S4023

Select, as an operating channel, a channel whose evaluation score is the highest in the channels that belong to the first channel set in the 5G Wi-Fi channel list

S4024

No operating channel that meets a requirement exists in the channels that belong to the first channel set in the 5G Wi-Fi channel list

FIG. 5-1

S4031

When a channel that belongs to a second channel set exists in a 5G Wi-Fi channel list, calculate an evaluation score of each channel that belongs to the second channel set in the 5G Wi-Fi channel list

S4032

Determine whether a highest evaluation score in the channels that belong to the second channel set in the 5G Wi-Fi channel list is greater than a second preset threshold associated with the second channel set

Yes                    No

S4033

Select, as an operating channel, a channel whose evaluation score is the highest in the channels that belong to the second channel set in the 5G Wi-Fi channel list

S4034

No operating channel that meets a requirement exists in the channels that belong to the second channel set in the 5G Wi-Fi channel list

FIG. 5-2

S4041

When a channel that belongs to a third channel set exists in a 5G Wi-Fi channel list, calculate an evaluation score of each channel that belongs to the third channel set in the 5G Wi-Fi channel list

S4042

Determine whether a highest evaluation score in the channels that belong to the third channel set in the 5G Wi-Fi channel list is greater than a third preset threshold associated with the third channel set

Yes    No

S4043

Select, as an operating channel, a channel whose evaluation score is the highest in the channels that belong to the third channel set in the 5G Wi-Fi channel list

S4044

No operating channel that meets a requirement exists in the channels that belong to the third channel set in the 5G Wi-Fi channel list

FIG. 5-3

S4051

When a channel that belongs to a fourth channel set exists in a 5G Wi-Fi channel list, calculate an evaluation score of each channel that belongs to the fourth channel set in the 5G Wi-Fi channel list

S4052

Determine whether a highest evaluation score in the channels that belong to the fourth channel set in the 5G Wi-Fi channel list is greater than a fourth preset threshold associated with the fourth channel set

Yes          No

S4053

Select, as an operating channel, a channel whose evaluation score is the highest in the channels that belong to the fourth channel set in the 5G Wi-Fi channel list

S4054

No operating channel that meets a requirement exists in the channels that belong to the fourth channel set in the 5G Wi-Fi channel list

FIG. 5-4

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040156336 A
- WO 2016110046 A